# EUROPÄISCHE PATENTSCHRIFT

(11) **EP 4 483 107 B1**
(45) Veröffentlichungstag und Bekanntmachung des Hinweises auf die Patenterteilung: **23.04.2025**
(21) Anmeldenummer: 23818401.4
(22) Anmeldetag: 05.12.2023
(51) Int. Cl.: F24S 40/80, F24S 30/425, F24S 20/70

(54) **SOLARANLAGE ZU LAND UND ZU WASSER**
ONSHORE AND OFFSHORE SOLAR-ENERGY SYSTEM
INSTALLATION SOLAIRE SUR TERRE ET SUR MER

(30) Priorität: 05.12.2022 DE 102022004547
(43) Veröffentlichungstag der Anmeldung: 01.01.2025
(73) Patentinhaber: Sinn Power GmbH, 82131 Gauting (DE)
(72) Erfinder: SINN, Hans-Werner, 82131 Gauting (DE)
(74) Vertreter: Kuhnen & Wacker Patent- und Rechtsanwaltsbüro PartG mbB
(86) Internationale Anmeldenummer: PCT/EP2023/084303
(87) Internationale Veröffentlichungsnummer: WO 2024/121131

(56) Entgegenhaltungen:
- EP-A1- 3 845 826
- EP-A1- 4 277 118
- WO-A1-2015/029728
- DE-A1- 102006 049 690
- DE-U1- 202014 101 685
- KR-B1- 101 615 312

## Beschreibung

Die Erfindung betrifft Solaranlagen, die Land-, Gebäude- oder Gewässer-gestützt eingesetzt werden. Dabei handelt es sich im Rahmen dieser Erfindung um die im Stand der Technik als Aufständerung bezeichnete Aufstellung sowohl einzeln als auch als Gruppierung von Solarpaneelen zu einer Solaranlage, die sowohl zu Lande, auf einem Gebäude oder einem Gewässer aufgestellt werden kann.

Im Stand der Technik werden Solaranlagen im Wesentlichen unbeweglich aufgestellt bzw. elektromechanisch der Sonne nachgeführt montiert. Hierbei gibt es die Herausforderung, eine mechanische Anbindung zu finden, die den Kräften von Geo-Einflüssen wie Wind, Schnee, Strömungen oder Wellen standhält. DE 10 2006 049690 A1, EP 3 845 826 A1, KR 101 615 312 B1, DE 20 2014 101685 U1 und WO 2015/029728 A1 offenbaren bekannten Solaranlagen.

Schnee kann je nach Region große Flächenkräfte auf im Wesentlichen horizontale Solarsysteme einbringen. Eine im Wesentlichen vertikale Aufständerung von Solarsystemen ist zweckmäßig, da die horizontale Fläche, auf der Schnee liegen bleiben kann, dann nur die vertikal obere Kante des Solarsystems betrifft und deshalb sehr klein ist.

Eine größere Herausforderung von Solarsystemen ist Wind. Da Solarsysteme physikalisch bedingt eine große Fläche zum Einfangen von Sonnenstrahlen benötigen, bildet diese beim Bau von Solaranlagen die größten Anforderungen an die Aufständerung von Solarsystemen. Windbedingt können auf herkömmliche Solarsysteme massive Flächenkräfte und Belastungen sowohl horizontal als auch vertikal sowie eine Kombination aus diesen Kräften entstehen.

Gleiches gilt für Strömungen im Wasser oder Wellenschlag. Treffen diese rechtwinklig auf die Solarfläche, können extrem hohe Kräfte entstehen, die kaum mechanisch und wirtschaftlich auslegbar sind. Zur Vermeidung von Beschädigungen an den Solarpanelen durch Geo-Kräfte, wie Wind, Wellen, Schnee, Schlagregen wird im Stand der Technik vorgeschlagen, sich der Schwerkraft zu bedienen. Die Solarpaneel können gemäß dem Stand der Technik ähnlich wie "Wäsche an einer Wäscheleine" aufgehängt werden. Beim Einwirken von Geo-Kräften wird das Solarpaneel ausgelenkt. Sobald die Geo-Kraft nachlässt, schwingt das Solarpanel zurück in die Ausgangsposition. Allerdings sind die Kosten und der Montageaufwand für eine solche hängende Lösung beträchtlich. Bereits für einen kleineren bis mittleren Solarpark wird eine Vielzahl Stützen benötigt werden, die einzeln, oft mit einem Fundament, ortsfest stabil verankert sein müssen, um die hohen Lasten der schwingenden Solarpaneele standhalten zu können.

Bei vertikal stehenden oder hängenden Systemen ist die Auslenkung kleiner als 360°, und deshalb kann die Energie, ob Strom oder Wärme, einfach über flexible Leitungen übertragen werden.

Die Erfindung zielt daher darauf ab eine mechanische als auch wirtschaftliche Lösung dahingehend zu finden, dass eine Aufständerung als auch ein Aufstellen mit einfachen mechanischen Mitteln ermöglicht, wobei die Solarpaneele auch unter Einwirkung von Geo-Lasten oder Geo-Kräften nicht zu Schaden kommen sollen.

Zur Lösung dieses Problems sollen die Solarmodule/Solarpaneele kippflexibel auf einer Achse angebunden werden, so dass sich beim Einwirken von Geo-Kräften auf die Solarfläche diese quer zur Kraftrichtung ausrichten. Bevorzugt liegt die Kippachse außerhalb der Solarfläche. Die Kippachse kann selbstverständlich aber auch quer durch die Solarpaneelfläche liegen. Bei der Erfindung soll das Prinzip der starren Anbindung umgekehrt werden und das Solarsystem soll sich den Geo-Kräften fügen.

Die Lösung der Aufgabe der Erfindung wird mit einer Solaranlage nach Anspruch 1 gelöst, deren bevorzugte Ausgestaltungen in den von Anspruch 1 direkt oder indirekten abhängigen Unteransprüchen angegeben sind. Ein erfindungsgemäßes Verfahren für die Montage einer Solaranlage wird mit dem nebengeordneten unabhängigen Anspruch 17 angegeben, wobei bevorzugte Ausführungsarten mit vom unabhängigen Verfahrensanspruch abhängigen Ansprüchen beschrieben werden.

So beschreibt Anspruch 1 eine Solaranlage mit zumindest einem Solarpaneel das in einem Rahmen fest aufgenommen ist, der - in einer im Wesentlichen vertikalen bzw. aufrechten Grundposition - das Solarpanel ebenfalls im Wesentlichen vertikal bzw. aufrecht stehend hält. Dabei ist der Rahmen mit dem darin aufgenommenen Solarpanelen um eine im Wesentlichen horizontale, im vertikal unteren Bereich des/der Solarpanels/e oder um eine im Wesentlichen horizontale, unterhalb des Solarpanels Kippachse 4 aus der Grundposition heraus kippbar, wenn auf das Solarpanel eine Auslenkkraft wirkt, bspw. eine Geo-Kraft, wie Wind oder Welle, oder eine andere Kraft mit horizontaler Kraftkomponente quer zur Kippachse. Der Rahmen kann dieser Kraft ausweichen und verhindert so eine Beschädigung des/der Solarpanels/e bzw. verringert die Abstützkräfte auf den Boden, ein Gestell oder eine mobile Vorrichtung, die weitaus höher wären, wenn der Rahmen und das zumindest eine Solarpanel unbeweglich aufgeständert wären. Erfindungsgemäß kann sich der Rahmen bei Nachlassen der Auslenkkraft bevorzugt selbsttätig um die Kippachse wieder in Richtung der Grundposition zurückstellen.

Die flexible Anbringung von Solarpaneelen kann den Aufwand zu Absicherung der Solaranbindung dramatisch reduzieren. Vor allem Strömungslasten wie Windlasten oder Wasserlasten, aber auch Impulslasten durch Wind oder Wasser wird ausgewichen. Eine horizontale Kraft auf die Solarstruktur wird stark reduziert bei Systemen die sich in den Wind stellen. Genauso werden Sog- oder Drucklasten auf das System minimiert. Aber unbeabsichtigte oder beabsichtigte mechanische Belastungen können so von der erfindungsgemäßen Solaranlage abgehalten werden, da diese den Belastungen ausweichen kann. Durch dieses Ausweichen werden auch die Abstützkräfte auf den Boden verringert, wodurch oftmals ein Verankerung mittels eines Fundaments entfallen kann.

Bei der Erfindung handelt es um eine Methode zur Befestigung von Solaranlagen, die zu beliebig großen Solarsystemen ausbaubar ist, zu Land und zu Wasserkönnen die Solarpaneele im Wesentlichen vertikal installiert werden und durch äußere Geo-Einflüsse von Strömungen oder Impulsen auf die Solarfläche, quer zu dieser, in die entsprechende Kraftrichtung ausgelenkt werden und sich automatisch bei Nachlassen der Auslenkkraft zurückstellen.

Die Befestigungsmethode hat die Eigenschaft, dass die Solarpaneele stehend installiert werden und beispielsweise durch ein Pendelgewicht, eine mechanische Federkraft, eine elektrische oder elektromechanische oder eine magnetostatische oder elektromagnetische Kraft zurückgestellt werden. Entsprechend müssen solche Systeme viel weniger verankert oder zur Standfestigkeit beschwert werden und können in Summe leichter und kostengünstiger aufgebaut werden.

Eine Ausführungsform dieses Solarsystems soll eine sich selbst aufstellende Pendelgeometrie sein. Ein Pendelgewicht stellt die Paneele im Wesentlichen senkrecht zurück. Dabei ist für den Fachmann klar, dass die Drehachse eine "echte Achse" oder aber auch ein gerundeter Standfuß sein kann.

Auch ist für den Fachmann klar, dass der Ausgangspunkt vor externer Krafteinwirkung in der Ruhestellung nicht notwendigerweise vertikal sein muss, sondern auch einen Winkel zur Senkrechten aufweisen kann. Das heißt bspw., dass eine Gewisse Südausrichtung in der Grundeinstellung eingestellt sein kann.

Die Befestigungsmethode hat weiter die Eigenschaft, dass die Solarpaneele ohne den Einfluss der äußeren Geo-Kräfte in einem Ruhepunkt/Grundposition stehen, wobei sie neben einer im Wesentlichen vertikalen Ausrichtung beispielsweise auch in einem Winkel zur Senkrechten in einer Grundpositionierung gehalten werden können. Hierzu können die Solarpaneele bezüglich der Vertikalen um eine im Wesentlichen horizontale Achse gedreht im Rahmen aufgenommen sein, wobei der Rahmen selbst im Wesentlichen vertikal ausgerichtet ist. Dies lässt sich mit den oben angesprochenen Rückstellkräften fachmännisch einfach realisieren, beispielsweise durch ein außermittig angebrachtes Rückstellgewicht oder Pendelgewicht oder einen Federanschlag, der den Rahmen etwas aus der Vertikalen kippt. Hierzu gibt es mannigfaltige fachübliche Lösungen, die sämtlich von der Erfindungsidee umfasst sind.

Bevorzugt ist der Rahmen in einer Ausführungsform oben offen ausgestaltet. So kann das zumindest eine Solarpaneel seitlich mittels zweier Schienen gehalten sein, die unterhalb des Solarpaneels z. B. durch das Rückstellgewicht/Pendelgewicht verbunden sind. So entsteht beispielsweise ein nach oben offener Rahmen, der weiter beispielsweise für eine größere Aussteifung in einer anderen Ausführungsform oben z. B. mit einer Querstrebe geschlossen werden kann.

Von der Erfindungsidee sind jedoch auch Rahmen umfasst, die mehrere Felder aufweisen, wobei in jedem Feld beispielsweise ein Solarpaneel mit Normgröße aufnehmbar ist. Da auch hier viele fachübliche Ausgestaltungen denkbar sind, wie ein Rahmen ausgestalte werden kann, um ein oder mehrere Solarpaneele aufzunehmen, sind alle diese Ausgestaltungen vom Geist der Erfindung umfasst. So sind beispielweise mehrere Solarpaneele auf einer Solaranlage flächig zueinander aufgebaut, wobei die flächig zueinander angeordneten Solarpaneele einen gemeinsamen Rückstellmechanismus, beispielsweise ein gemeinsames Rückstellgewicht, aufweisen können oder mehrere Solaranlage über ihre jeweiligen Rahmen miteinander verbunden sind, und so einen modular aufgebauten Flächenverbund mit einer Vielzahl der Kippmechanismen in flächiger Anordnung zueinander bilden, und um miteinander in einem größeren Solarsystem verbunden werden. Oftmals werden solche größeren Solarsysteme mit in Reihen angeordneten Solarpaneelen aufgestellt, so dass es denkbar ist, dass alle Solarpaneele einer Reihe miteinander verbunden sind und nur miteinander kippen können. Dadurch wird z.B. erreicht, dass eine höhere Kraft notwendig ist, um alle Solarpaneel aus der Vertikalen zu kippen, wodurch eine gewisse Mindestauslenkkraft erforderlich ist, damit ein unnötiges Pendeln, bei Belastungen unterhalb einer vordefinierten Belastungsgrenze für die Solaranlage, vermieden wird, was zu Effizienzverlusten führt kann, da die zur Sonneneinstrahlung projizierte Fläche durch solche Pendelbewegungen abnimmt. Ein weiterer Grund eine Mindestauslenkkraft vorab zu definieren, liegt auch darin einen zur Stromwandlung von DC auf AC notwendigen Wechselrichter oder einer zu befüllenden Batterie oder anderen Verbrauchern möglichst lange einen konstanten Gleichstrom zur Verfügung zu stellen und nicht permanent wechselnde Ströme, wenn bspw. nur leichte Winde wehen, oder ein Vogel auf der Solaranlage sitzt.

Wie der Fachmann leicht erkennt, kann so eine Mindestauslenkkraft auch für jede einzelne, ggfs. freistehende, Solaranlage gemäß der Erfindung definiert werden. Solche eine Mindestkraft zur Auslenkung eines Solarpaneels einer erfindungsgemäßen Solaranlage kann bspw. durch eine geeignete Federvorspannung der Rückstellfedern erreicht werden oder beispielsweise durch ein magnetische Arretierung oder Rastung, wobei über die Magnetkraft die Mindestauslenkkraft einstellbar ist. Dabei kann ein Magnet oder ein magnetisches Gegenelement starr oder elastisch am beweglichen Teil des Rahmen oder am Rückstellgewicht angebracht sein, wobei das zugehörige Gegenelement oder der Magnet entsprechend elastisch oder starr auf einem ortfesten Teil der Solaranlage angebracht ist.

Bei der Definition der Höhe der Mindest-Auslenkkraft kann beispielsweise an eine Kraft gedacht werden, die so hoch ist, dass der Rahmen mit dem darin aufgenommenen zumindest einen Solarpaneel erst dann aus seiner Ruhestellung/Grundposition heraus geschwenkt werden kann, wenn die Auslenkkraft größer ist als eine Kraft, die sich ergäbe, wenn eine Windlast mit Windstärke 2 auf das Solarpanel wirkt. Die hier angegebene Kraftdefinition für eine Mindestauslenkkraft ist jedoch rein beispielhaft und hängt von vielen andern Parametern ab, wie Solarpaneelfläche, Steifigkeit des Rahmens, Art des verwendeten Solarpaneels, Einsatzbedingungen, etc.

Die erfindungsgemäßen Solaranlage werden für die Aufständerungen der Solarpaneele in Ost-West Ausrichtung verwendet, in der die im Wesentlichen vertikale Ausrichtung der Solarpaneele über den Tagesverlauf einen höheren Ertrag bringt als eine beispielsweise um 20° oder mehr geneigte Ausrichtung, wie es bei einer Süd-Ausrichtung der Solarpaneel von Vorteil ist. Erfindungsgemäß werden daher in der Ost-West-Aufstellung bi-fazialen Solarpaneelen verwendet, mit denen auf beiden Seiten Solarenergieerträge erzielt werden können, sei es durch direkte oder indirekte Sonneneinstrahlung. Daher ist es in einer Ausführungsform der Erfindung bevorzugt, wenn die Solarpaneele einer erfindungsgemäßen Solaranlage ohne den Einfluss von Geo-Kräften in der im Wesentlichen vertikalen Grundposition ruhen, damit ein möglichst hoher Wirkungsgrad erzielt wird. Wie oben bereits ausgeführt ist mit "im Wesentlichen vertikal" im Rahmen dieser Erfindung auch eine leichte Neigung gegenüber der Vertikalen umfasst, die bspw. im Bereich von kleiner +/- 15° gegenüber der Vertikalen liegt. Solche kleinen Auslenkungen können beispielsweise in nördlichen Breiten bevorzugt sein, wo die Sonnenstände den vertikalen Sonnenzenit nicht oder über den Jahresverlauf nur kurzzeitig erreichen. Hier kann ggfs. über eine geeignete Ausrichtung durch Reflexionseffekte über den Tagesverlauf eine höhere Ausbeute an Solarenergie erzielt werden als bei einer rein vertikalen Ausrichtung. Allerdings ist eine vertikale Grundausrichtung mit bspw. bi-fazialen PV Zellen vorgesehen, da hier auch eine mögliche Schneelast zum allergrößten Teil vermieden wird und diese in der Auslegung kaum Berücksichtigung finden muss.

Solche Reflexionseffekte treten insbesondere bei gewässergestützten Solaranlagen mit bi-fazialen Solarpaneelen auf, da die Wasseroberfläche solche Reflexionen begünstigt, insbesondere bei ruhenden oder nahezu ruhenden Gewässern. Die erfindungsgemäßen Solaranlagen sind daher in einer Ausführungsform so gestaltet, dass diese einen Schwimmkörper aufweist, der unterhalb des Solarpaneels am Rahmen montiert ist, und der geeignet ist, das Solarpaneel schwimmend über einer Gewässeroberfläche zu halten, wobei ein Rückstellgewicht/Gegengewicht unterhalb der Wasseroberfläche angeordnet ist.

In einer weiteren erfindungsgemäßen Ausführungsform der schwimmenden Solaranlage ist das Rückstellgewicht im Auftriebskörper integriert. Eine solche Ausführungsform zeichnet sich durch einen niedrigen Tiefgang aus und eignet sich damit für flache Gewässer, wie z.B. Moorgewässer. Auch bei zeitweise komplett trockengelegten Gewässern funktioniert dann das erfindungsgemäße Prinzip weiterhin und verhält sich dann wie die landbasierte "Steh-auf-Männchen" Variante.

Somit verläuft in dieser Ausführungsform die Kippachse durch den auf der Wasseroberfläche schwimmenden Schwimmkörper, je nachdem, wie tief dieser ins Wasser eindringt. Auch bei dieser Ausführungsform kann die Rückstellung allein über die Gewichtskraft erfolgen, aber auch durch andere Rückstellkräfte unterstützt werden, wie Federkräfte, magnetische, mechanische, elektromagnetische oder elektromechanische Kräfte. Auch hier können die Kräfte so ausgelegt werden, dass eine vordefinierte Mindestauslenkkraft erforderlich ist, das Solarpaneel aus der im Wesentlichen vertikalen Ruhestellung herauszukippen.

Die zuvor beschriebene schwimmende Ausführungsform zu Wasser veranschaulicht in einfacher Form das Grundprinzip der Erfindung: Ein in einem Rahmen aufgenommenes Solarpaneel kann durch Einwirkung einer Auslenkkraft, z.B. einer Geo-Kraft, aus seiner im Wesentlichen vertikalen Ruhestellung/Grundposition ausgelenkt/geneigt werden und stellt sich selbsttätig bei Nachlassen der Auslenkkraft wieder in Richtung seiner Ruhestellung zurück. Im Falle der schwimmenden Ausführungsform durch das Gegengewicht, welches bezüglich des Schwimmkörpers gegenüberliegend zum Solarpaneel angeordnet ist. Dieses Grundprinzip der Erfindung kann für Ausführungsformen zu Land angewendet werden, um kippbare Solaranlage bereitzustellen, bei denen ein Solarpaneel durch Wegkippen einer Auslenkkraft ausweicht, bevor Beschädigungen am Solarpaneel entstehen.

In einer beispielhaften landgestützten Ausführungsform der erfindungsgemäßen Solaranlage weist der Rahmen im unteren Bereich ein Rückstellgewicht in Form eines quer zur Kippachse konvex gewölbt ausgebildeten Standfußes auf, auf dem die Solaranlage in Art eines "Steh-auf-Männchens" kippbar ist. Durch eine geeignete Ausgestaltung, beispielsweise Abflachung, der Aufstandsfläche kann auch hier eine Mindestauslenkkraft vordefiniert werden, sodass das Solarpaneel erst dann aus im Wesentlichen vertikalen Grundposition heraus kippt, wenn die Mindestkraft überschritten wird.

In einer weiteren landgestützten Ausführungsform der Erfindung ist der Rahmen in einem z.B. auf dem Boden stehenden Gestell kippbar montiert, wobei die im Wesentlichen horizontale Kippachse im vertikal unteren Bereich des Solarpanels oder unterhalb des Solarpanels verläuft. Bei einer auf das Solarpaneel quer zur Kippachse auftretenden Kraft kann das Solarpaneel der erfindungsgemäßen Solaranlage aus der Grundposition heraus kippen, wobei ein Rückstellgewicht, das bezüglich der Kippachse gegenüberliegend zum Solarpanel angeordnet ist, eine rückstellende Gegenkraft erzeugt, die das Solarpaneel in Richtung der im Wesentlichen vertikale Grundposition zurückstellt, wenn die Auslenkkraft nachlässt.

In dieser Ausführungsform bildet der Rahmen mit dem darin aufgenommenen Solarpaneel zusammen mit dem unten am Rahmen angeordneten Rückstellgewicht eine erste Baugruppe, die um die Kippachse kippen kann. Die Kippachse, welche bevorzugt in oder parallel unterhalb der Solarpaneelfläche verläuft, wird von der zweiten Baugruppe dem Gestell oder Aufständerung aufgenommen, sodass beiden Baugruppe relativ zueinander um die Kippachse kippbar sind. Dabei ist das Gestell in einer weiter Ausführungsform der Erfindung ortsfest auf dem Boden aufstell- und/oder verankerbar. Die aufstellbare Variante ist somit auch transportfähig, womit die erfindungsgemäßen Solaranlage auch auf mobilen Vorrichtung zum Einsatz kommen kann. So kann die landgestützte Ausführungsform ortsfest auf Feldern, Gärten, Terrassen, Plätzen, Dächern, z.B. Flachdächer oder Industriedächer, etc. Verwendung finden, als auch als mobile Stromquelle auf Ladeflächen von Fahrzeugen, Transportanhängern oder Schiffen o.Ä. Damit sind auch temporäre Einsätze für die erfindungsgemäßen Solaranlage möglich, um bspw. Veranstaltungen, wie Volksfeste, Kundgebungen oder Ausstellungen mit Solarstrom versorgen zu können Wegen der stark reduzierten Horizontal- wie Vertikalkräfte können entsprechende Systeme bspw. auch als mobile Anlagen auf "Räder" gestellt werden, um so eine flexible mobile dezentrale Stromerzeugung zu gewähren. Die stark reduzierten Kräfte ermöglichen es, dass ein ortfestes unverankertes Gestell relativ leicht und damit kostengünstig ausgeführt werden kann. Auch wenn man sich bei der Ausführung des Gestells für eine bodenverankerte Variante entscheidet, kann die Verankerung wesentlich geringer dimensioniert sein. Dabei ist die Kombinierbarkeit mit Batteriesystemen oder thermischen Speichern selbstverständlich, so dass eine mobile Energieversorgung einfach aufgebaut werden kann.

Speziell bei der landgestützten Ausführungsform der erfindungsgemäßen Solaranlage ist ein Rückstell- oder Gegengewicht nicht zwingend erforderlich, um ein durch beispielsweise Geo-Kräfte ausgelenktes Solarpaneel wieder in seine im Wesentlichen vertikale Grundposition zurückzuschwenken. Dies kann, wie der Fachmann leicht erkennt auch durch elastische, mechanische, elektromechanische, magnetische, elektromagnetische Kräfte oder durch eine Kombination dieser Kräfte erfolgen. Allerdings ist eine Rückstellung eines ausgelenkten Solarpaneels durch geeignetes Anbringen eines Rückstellgewichtes, das wohl robusteste Ausführungsbeispiel, da die Gewichtskraft keiner Materialermüdung oder Verschleiß unterworfen ist. Zudem wandert der Schwerpunkt bei einem drehbar mit einem Rahmen aufgestellten Solarpaneel beim Auslenken immer auf die andere Seite der Drehachse als der Kraftangriffspunkt der Auslenkkraft. Die horizontalen Kräfte, die im Lagerpunkt auf das Gestell wirken, bleiben im Verhältnis zur vertikalen Komponente der Lagerkraft wegen des hohen Eigengewichts der drehbaren Baugruppe relativ gering. Dies trägt zu einer hohen Kippstabilität des ortsfesten Gestells bei, wodurch dieses nicht übermäßig ballastiert oder verankert werden muss. Die Breite bzw. Tiefe des Standfußes kann vergleichsweise gering bleiben. Bei dieser Art von Rückstellmechanismus wird kein Moment auf das Gestell eingebracht, was einen stabilen Stand des Gestells fördert. Bei nicht Gewichtskraft-Rückstellmechanismen, die oben angesprochen wurden, wird immer ein Moment auf das Gestell eingebracht, was ein Umkippen des Gestells begünstigt.

So ist es erfindungsgemäß bevorzugt ein Gegen- oder Rückstellgewicht im unteren Bereich des Rahmens vorzusehen das zumindest einen Teil der Rückstellkräfte erzeugt, wenn das Solarpaneel beispielsweise durch eine Geo-Kraft ausgelenkt wird. Dabei können die erwähnten elastischen, mechanische, elektromechanische, magnetische, elektromagnetische Kräfte als Zusatzkräfte eingesetzt werden, um beispielsweise eine Mindestauslenkkraft vorzugeben, die auf des Solarpaneel wirken kann, bevor diese der Belastung ausweicht. Für den Fachmann ist klar, dass neben Gravitationsrückstellkräften auch mechanische oder elektrische Feder-Dämpfer Systeme als Rückstellsystem installiert werden können. Eine Gravitationsrückstellung erscheint allerdings am ökonomischsten.

Für das Gegen-/Rückstellgewicht können verschiedene Materialien zum Einsatz kommen, die bevorzugt ein hohes spezifisches Eigengewicht aufweisen, wie Metalle, Sand, Wasser, Beton, etc. Speziell die Verwendung von Beton ermöglich ein hohes Maß an Gestaltungsfreiheit zu ökonomisch vertretbaren Kosten. So kann hier beispielsweise ein Magnet, eine Magnetaufnahme, ein magnetisches metallisches oder eine Gegenelementaufnahme bei der Herstellung eines Betongegengewichtes in der geeigneten Position durch festsetzen in der Schalungsform kostengünstig eingebracht werden, wobei die Kosten für ein Betonrückstellgewicht weit unter dem liegen, was Rückstellgewicht aus massiven Metall kostet, was zudem gegen Witterungseinflüsse geschützt werden müsste.

In einer bevorzugten Ausführungsform des Rückstellgewicht weist das Rückstellgewicht Ausnehmungen auf, mittels derer das Rückstellgewicht und/oder die Solaranlage zusammen mit dem drehfest am Rahmen montierten Rückstellgewicht von einer Transportvorrichtung, wie beispielsweise einem Gabelstapler bewegbar ist. So sind die Ausnehmungen bevorzugt eine Negativform von Zinken einer Transportgabel eines Gabelstaplers oder eines Hubwagens und sind beispielsweise den Ausnehmungen einer Industriepalette nachempfunden. Durch eine solche Ausgestaltung können nicht nur die Rückstellgewichte selbst mittels einer Transportvorrichtung bewegt werden, sondern auch die montierte Solaranlage, da dann der Rahmen mit dem darin montierten Solarpaneel und dem Rückstellgewicht auf der Gabel eines Stapler stehend oder liegend transportiert werden kann, je nachdem wo die Ausnehmungen angeordnet sind. Bei der landgestützten Variante kann das Gestell vertikal nach unten hängen, wenn die Ausnehmungen in Rückstellgewicht nach unten weisen. Weisen die Ausnehmungen hingegen zur Vorder- oder Rückseite kann die Solaranlage liegend auf dem Stapler transportiert werden und das Gestell hängt vertikal nach unten, da es sich um die Kippachse drehen kann. Um ein ungewolltes hin- und her schwingen des Gestells beim Transport zu verhindern, kann ein Arretiermittel eingesetzt werden, das die Drehbewegung zwischen Rahmen und Gestell blockiert. Dies kann auch beim stehenden Transport eingesetzt werden, um bei einem gleichzeitigen Transport mehrerer Solaranlagen ein Aneinanderschlagen der Solarpaneele zu verhindern.

Bei der Montage der erfindungsgemäßen Solaranlage werden die erfindungsgemäß bevorzugten Rückstellgewichte aus Beton beispielsweise vorort bei der Aufstellung eines Solarparks oder Solarsystems hergestellt und müssen so nicht transportiert werden. Hierzu ist es bevorzugt die leeren Schalungsformen an den Aufstellungsort zu transportieren und mit dort angesetzten oder angelieferten Beton zu befüllen. Dazu sind die Schalungsformen so ausgestaltet, dass ihre Längsseiten abstandfrei hintereinander auf einer Fläche aufgereiht werden können und benachbarte, einander sich berührende Seitenflächen in etwa dieselbe Höhe aufweisen, wobei die quer dazu stehenden Seitenflächen eine größere Höhe aufweisen. Das Einfüllen von nicht-ausgehärteter Betonmasse kann nun so vorgenommen werden, dass nicht-ausgehärtete Betonmasse, die über eine Schalungsform hinausläuft, in zumindest eine der angrenzende Schalungsform hineinläuft und diese befüllt. Durch die höheren Seitenflächen fließt der Beton nur zwischen beieinander liegenden Schalungsformen und es können so mit einem Betonguss mehrere Rückstellgewicht gleichzeitig geformt werden.

Weiter bevorzugt werden vor dem Einfüllen von nicht ausgehärteter Betonmasse Einlegeteile, wie Transportösen oder Ausschalösen, Befestigungselemente, oder magnetische Elemente in die jeweiligen Schalungsformen so eingebracht, dass diese während des Einfüllens der nicht-ausgehärteten Betonmasse nicht aufschwimmen und nach Aushärten der Betonmasse an einer innerhalb der Solaranlage vorbestimmten Position angeordnet sind.

Bevorzugt werden die erfindungsgemäßen Solaranlage mit liegenden Solarpaneel montiert, d.h. der Rahmen - im einfachsten Fall zwei Schienen - liegt beispielsweise flach auf einem Tisch und das Solarpaneel wird darin befestigt. In derselben Position kann auch das Rückstellgewicht an den Rahmen angebracht werden, wobei, wenn ein liegender Transport zum Aufstellort vorgesehen ist, die Ausnehmungen im Rückstellgewicht nach unten schauen sollten damit die fertig montierte Solaranlage mit einer Gabel der Transportvorrichtung aufgenommen und zum Aufstellort verbracht werden kann. Schauen die Ausnehmungen des Rückstellgewicht jedoch vom Solarpaneel weg, so muss die Solaranlage auf die Gabel gehoben werden und kann jedoch stehend zum Aufstellort transportiert werden und dort direkt abgestellt werden. Bei einem liegenden Transport erfolgt die Aufrichtung am Aufstellort.

Zusammenfassend lässt sich sagen, dass in einem alternativen Aufbau vertikal durch Pendel stehende Solarsysteme wie eine Perlenkette entlang einer geraden Stange, bspw. aufgereiht werden können. Auf der geraden Stange angeordnet agieren die einzelnen Aufhängungen bspw. unabhängig. Die Windausrichtung erfolgt dabei nicht notwendigerweise gemeinsam für alle Paneele, sie kann aber gemeinsam erfolgen. Eine entlang eines Seiles wie eine Perlenkette ausgerichtete Lösung kann den Durchbruch bei schwimmenden Solaranlagen bedeuten. Über Auftriebskörper entlang der geraden Stange oder des Seils oder an der Solaranbindung selbst kann diese Solar-Perlenkette an einer Wasseroberfläche oder sonstiger Flüssigkeitsoberfläche entlang gespannt werden. Geo-Kräfte wie Wind, Strömungen und Wellen kippen die einzelnen Segmente aus der Kraftrichtung heraus. Über dieses Verfahren kann in erheblichem Maße die Krafteinwirkung auf das System reduziert werden. Es ist dabei sogar vorstellbar, dass das gesamte System dabei teils oder dauerhaft unter Wasser in einem Schwebezustand gehalten betrieben wird. Technologisch ist diese Anordnung leicht so auslegbar, dass die gerade Stange oder das Seil einen Bogen macht. Wie bei einer Perlenkette können die Perlen hier synonym für die Solaranbindungen "gedreht" bzw. ausgelenkt werden. Die gesamte Kette kann aber in beliebigem Bogen, bspw. durchhängend oder in einem Bogen im Wasser schwebend, oder in einem durch eine vorherrschende Wind- oder Strömungsrichtung auf der Wasseroberfläche oder in der Luft ausgelenkt werden. Auf dem Wasser aufgebaute Systeme dieser Art haben neben der bevorzugten technischmechanischen Vereinfachung auch den entscheidenden Vorteil, dass diese gegenüber bekannten Lösungen nur sehr geringe Flächenabdeckungen haben. Durch die im Wesentlichen vertikale Aufständerung ist die Flächenabdeckung oder Flächenversiegelung eine Linie mit der Fläche der stirnseitigen Kanten von Solarmodulen an Land sowie auf Flüssigkeit schwimmend oder in einer Flüssigkeit schwebend. Dies reduziert in erheblicher Weise den möglichen Einfluss auf Flora, Fauna und Habitat von Gewässern und unterstützt den natürlichen Biozyklus.

Großen Sinn können sich den Geo-Kräften fügendende Solaranlagen auch in einer aufgeständerten Bauweise auf Gebäuden machen. Speziell in einer flächig angeordneten, vertikalen Ost-West Ausrichtung der Solarflächen unterstützen diese Ausrichtungen, neben den mechanischen und ökonomischen Verbesserungen, im Erzeugungsprofil typische Verbrauchsprofile des täglichen Lebens, die morgens und abends durch recht hohe Verbrauchswerte gekennzeichnet sind, während liegend Solarpaneele dann nur noch wenig Strom liefern.

Gleiches gilt für den Einsatz als Agri-Solaranlage. Weil sie den Kräften nachgeben, können diese Systeme ohne eine feste Betonierung oder Pfeilersetzung im Boden einfach mit leichter Beschwerung als "Solar-Zaun" oder parallele "Solar-Zäune" auf dem Boden aufgeständert werden ohne Gefahr zu laufen, beim einem Sturm umzufallen.

Als gespannte Seilanlage über einer Fläche kann Landwirtschaft, über Straßen oder jegliche sonstige Parallelnutzung der Fläche darunter erfolgen.

Die im Wesentlichen vertikalen Anordnungen führen auch zu Land zu Vorteilen im Umweltschutz. Die Flächenversiegelung geht gegen Null, und zwar sowohl bei der "hängenden" als auch bei der "stehenden" Lösung.

Wegen der vereinfachten Aufständerungsmöglichkeiten kann eine Durchbrechung der Bodenoberfläche vermieden werden.

Sogar die parallele Anwendung über Waldgebieten, über Straßen oder sonst wo kann über die "hängende" Lösung einfach und ohne wesentliche umwelttechnische Einflüsse aufgebaut werden.

Im Folgenden wird anhand von bevorzugten Ausführungsbeispielen, die erfindungsgemäße Solaranlage in weiteren Einzelheiten auch grafisch erläutert. Diese Ausführungsbeispiele schränken jedoch den Erfindungsgedanken nicht ein. Es zeigen:

### Figurenkurzbeschreibung

- Figur 1: eine im Wesentlichen senkrecht hängende Solaranlage, wie sie beispielsweise aus dem Stand der Technik bekannt ist;
- Figur 2: eine im Wesentlichen senkrecht stehende Solaranlage gemäß einer ersten Ausführungsform der Erfindung.
- Figur 3: einen aus dem Stand der Technik bekannten Verbund von Solaranlagen nach Figur 1;
- Figur 4: einen aus dem Stand der Technik bekannten Verbund von Solaranlagen nach Figur 3;
- Figur 5: einen Verbund von Solaranlagen nach Figur 2;
- Figur 6: eine auf einer im Wesentlichen horizontalen Fläche stehende Solaranlage gemäß einer zweiten Ausführungsform der Erfindung;
- Figur 7: einen Verbund von Solaranlagen nach Figur 6 nebeneinander;
- Figur 8: ein Verbund von Solaranlagen nach Figur 6 nebeneinander und hintereinander;
- Figur 9: eine Solaranlage gemäß einer dritten Ausführungsform der Erfindung nach dem Prinzip aus Figur 2;
- Figur 10: einen Verbund von schwimmenden Solaranlagen nach Figur 9;
- Figur 11: einen Verbund von schwimmenden Solaranlagen nach Figur 9 nebeneinander und hintereinander;
- Figur 12: eine Solaranlage gemäß einer vierten Ausführungsform der Erfindung nach dem Prinzip aus Figur 2;
- Figur 13: ein Verkettung von fahrbaren Solaranlagen nach Figur 12;
- Figur 14: eine winklige Anbindung der Solarmodule im Grundzustand;
- Figur 15: zeigt eine Explosionsdarstellung der erste Ausführungsform der erfindungsgemäßen Solaranlage;
- Figur 16: Transport einer erfindungsgemäßen Solaranlage.
- Figur 17: Schalungsform zum Herstellen eines erfindungsgemäßen Rückstellgewichts.

In der nachfolgenden detaillierten Figurenbeschreibung werden für gleiche bzw. äquivalente Gegenstände zum Verbessern der Lesbarkeit die gleichen Bezugszeichen verwendet.

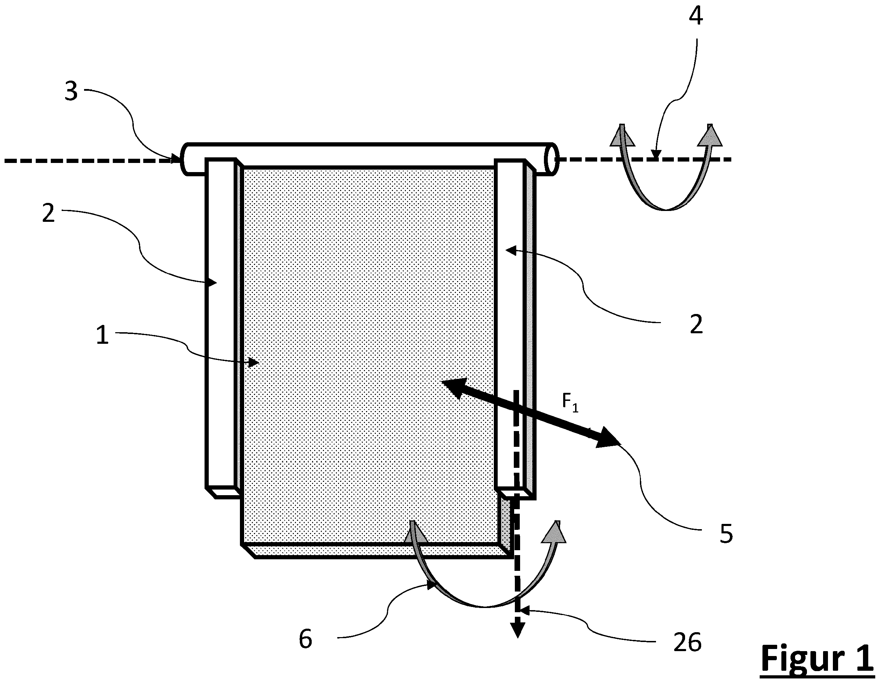

Figur 1 zeigt eine im Wesentlichen senkrecht hängende Solaranlage, wie sie beispielsweise aus dem Stand der Technik bekannt ist. Durch die obere axiale, drehbare Aufhängung und das Eigengewicht hängt diese im Ruhezustand senkrecht nach unten. Durch äußere Kräfte senkrecht auf die Solarfläche des Solarpaneels 1 kann die Solaranlage in Kraftrichtung ausweichen und in die Kraftrichtung kippen, so dass die Kraft auf die gesamte Anlage stark reduziert wird.

Bezugszeichen 1 beschreibt hierbei die Solarplatte/Solarpaneel 1, deren/dessen Ausrichtung im Wesentlichen vertikal ist. Durch die Gravitation wird diese vertikal nach unten gehalten. Bezugszeichen 2 beschreibt einen Rahmen 2, an dem die Solarplatte 1 befestigt ist bzw. in dem das Solarpaneel 1 aufgenommen ist. Bezugszeichen 3 beschreibt die Welle 3, um die sich die Aufhängung bzw. die Solarplatte 1 drehen kann. Bezugszeichen 4 beschreibt die Achse 4, um die sich die Solaranlage drehen kann. Bezugszeichen 5 beschreibt die Kraft 5, die durch eine Geo-Kraft, wie Strömung oder Impuls im Wesentlichen senkrecht auf die Solarplatte 1 bzw. die Solarfläche bewirkt wird. Beispielsweise kann dies eine Wind- oder Wasserkraft sein. Bezugszeichen 6 beschreibt die Auslenkungsrichtung 6 bzw. Klapprichtung der Solaranlage, im Wesentlichen senkrecht zur Solarfläche. Bezugszeichen 26 beschreibt die in senkrechter /vertikaler Richtung nach unten zeigende Gewichtskraft bzw. die Gravitationsrichtung.

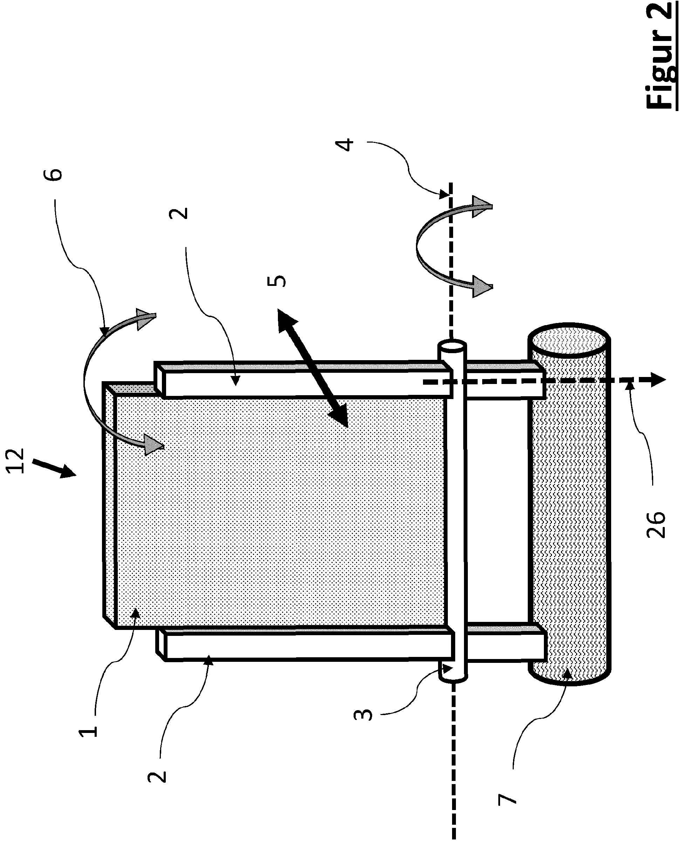

Figur 2 beschreibt eine im Wesentlichen senkrecht stehende Solaranlage gemäß einer ersten Ausführungsform der Erfindung. Unter der Drehachse/Kippachse 4 befindet sich ein Gewicht 7, beispielsweise. ein Pendelgewicht. Dies kann direkt unter der Achse 4 im Achskörper 3 liegen oder auch mit Abstand zum Achskörper 3 angeordnet sein, um einen höheren Hebelarm zu erzeugen. Das Gewicht 7 ist so dimensioniert, dass die Solaranlage im Ruhezustand im Wesentlichen senkrecht steht, bzw. beim Kippen der Solaranlage immer wieder in die Ausgangsposition gedrängt wird. Durch äußere Kräfte senkrecht auf die Solarfläche bzw. das Solarpaneel 1 kann die Solaranlage in Kraftrichtung ausweichen und in die Kraftrichtung kippen, so dass die Kraft auf die gesamte Anlage stark reduziert wird. Bei Nachlassen der äußeren Kraft schwingt die Solaranlage wieder zurück in Ihren Ruhezustand, d.h. in die Ausgangsposition.

Bezugszeichen 1 beschreibt auch hierbei die Solarplatte, d.h. das Solarpaneel 1, deren/dessen Ausrichtung in der Ausgangsposition im Wesentlichen vertikal ist. Bezugszeichen 2 beschreibt den Rahmen 2, an dem die Solarplatte befestigt ist. Bezugszeichen 3 beschreibt die Welle bzw. den Achskörper 3, um die/den sich die Aufhängung bzw. die Solarplatte drehen kann. Bezugszeichen 4 beschreibt die Kippachse 4, um die sich die Solaranlage drehen kann. Bezugszeichen 5 beschreibt die Kraft beispielsweise bewirkt durch eine Geo-Kraft, wie Strömung oder Impuls im Wesentlichen senkrecht auf die Solarplatte 1 bzw. die Solarfläche. Beispielsweise kann dies Wind- oder Wasserkraft sein. Bezugszeichen 6 beschreibt die Auslenkungsrichtung bzw. Klapprichtung 6 der Solaranlage, im Wesentlichen senkrecht zur Solarpaneelfläche 1. Bezugszeichen 7 beschreibt das Gewicht bzw. Rückstellgewicht 7, welches so groß ist, dass der Schwerpunkt der Solaranlage in Gravitationsrichtung unter der Dreh-/Kippachse 4 liegt. Bezugszeichen 26 beschreibt die Senkrechte bzw. Vertikale 26 nach unten bzw. die Gravitationsrichtung.

Figur 2 zeigt anschaulich, dass das zumindest eine Solarpaneel 1 in einem Rahmen 2 aufgenommen ist, der seitlich beispielsweise durch zwei schienenartige Leisten gebildet ist, die mit einem Achskörper 3 im unteren Bereich verbunden sind. Die Leisten stehen dabei über den Achskörper auf die andere Seite des Solarpaneel 1 hinaus und können so dazu verwendet werden, um dort ein Rückstellgewicht 7 anzubringen, was in der Ausgangposition der erfindungsgemäßen Solaranlage in vertikaler Verlängerung des Rahmens 2 bezüglich der Kippachse 4 gegenüberliegend zum Solarpaneel 1 angeordnet ist. Wie ein Fachmann leicht nachvollziehen kann, kann eine Kraft 5 auf das Solarpaneel 1 die Solaranlage um die Kippachse 4 drehen, wobei das Rückstellgewicht 7 eine Gegenkraft hierzu erzeugt.

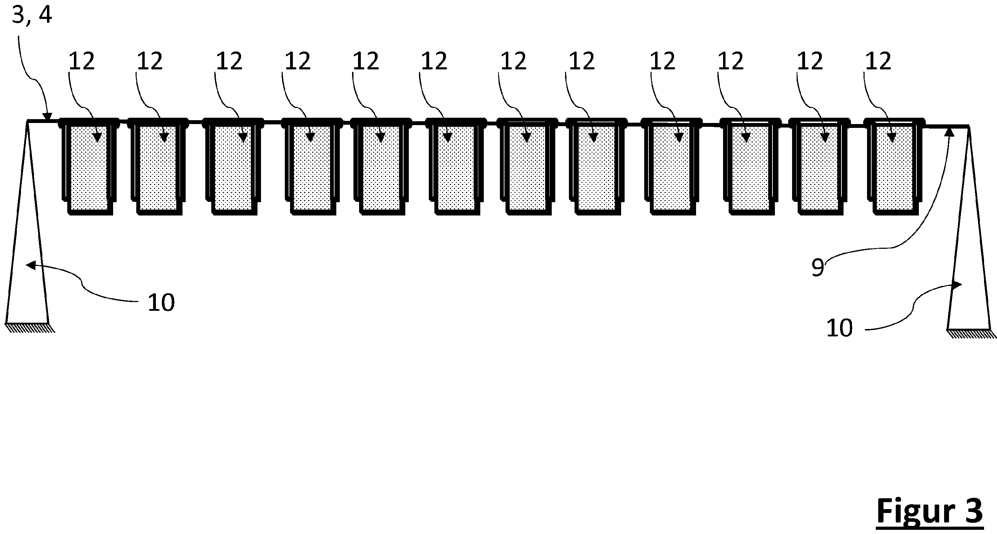

Figur 3 beschreibt einen aus dem Stand der Technik bekannten Verbund von hängenden Solaranlagen nach Figur 1, die auf der gleichen Achse 4, beispielsweise. einer Welle 3, einer Stange oder einem Seil hängen. Bezugszeichen 9 beschreibt eine Achse, eine Welle 3, eine Stange oder eine Seil oder eine vergleichbare Aufhängung. Bezugszeichen 10 beschreibt einen Ankerpunkt. Dies kann ein Ständer. ein Pfahl, ein Gebäude, ein Baum, ein Fels oder jegliche Art von Anbindung sein. Die Bezugszeichen 12 beschreiben hier die Solaranalagen aus Figur 2, welche aus einem oder mehreren Solarmodulen/Solarpaneelen 1 bestehen können.

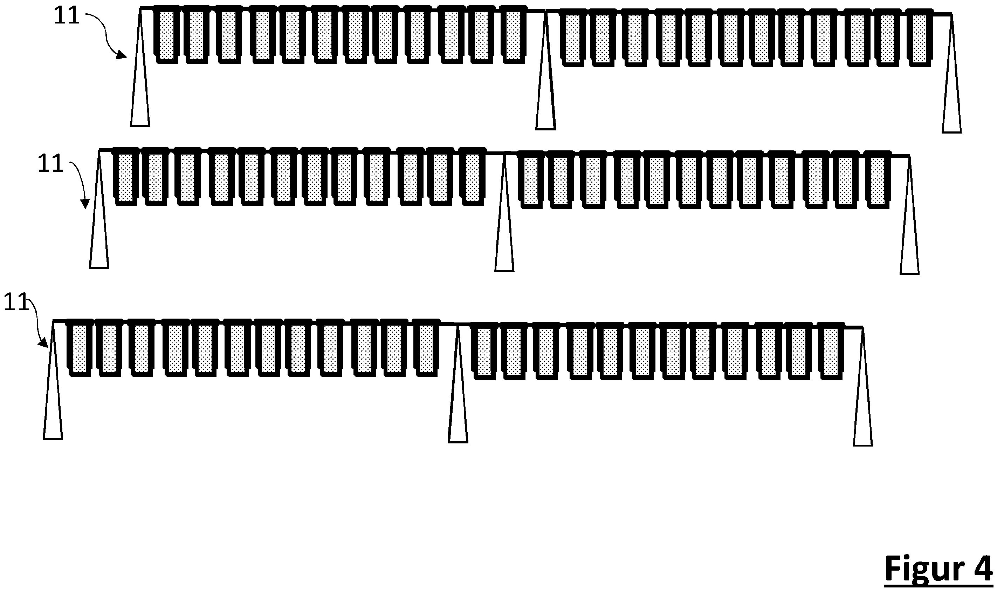

Figur 4 beschreibt einen Verbund von Solaranlagen nach Fig. 3, welcher aus dem Stand der Technik bekannt ist, wobei die Solaranlagen 12 sowohl nebeneinander als auch hintereinander aufgereiht sein können. Die einzelne Reihe kann dabei aufsteigend oder absteigend sein, auch kann die Welle 3, beispielsweise ein Seil, bzw. die Achse 4 durch das Gewicht der Solaranlagen 12 gebogen sein. Des Weiteren können die Reihen in unterschiedlichen Höhen fixiert werden. Dabei ist der Abstand der Reihen als auch die Ausrichtung und Höhe so gewählt, dass diese sich möglichst wenig untereinander verschatten. Genauso kann eine Höhe gewählt werden, dass unter den Reihen die Nutzung der Landfläche für andere Zwecke stattfinden kann. Als Beispiele werden Fahrzeugbetrieb, landwirtschaftliche Nutzung, Fußgängerwege, Gebäude, Wälder, Schluchten, Gewässer oder ähnliche Dinge genannt. Bezugszeichen 11 beschreibt eine hängende Solaranlage nach Figur 3.

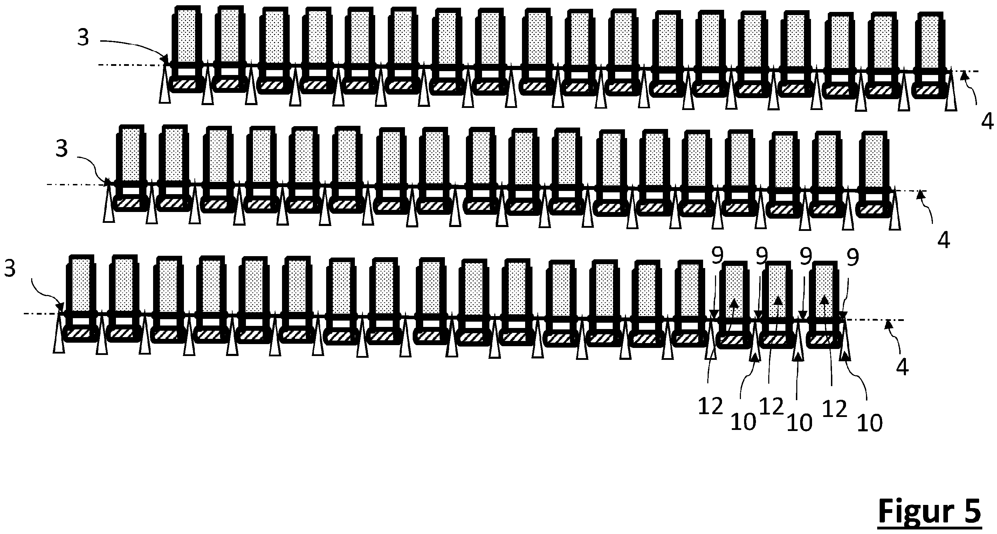

Figur 5 beschreibt einen Verbund von stehenden Solaranlagen 12 nach Figur 2 die sowohl nebeneinander als auch hintereinander aufgereiht sein können. Jede einzelne Reihe kann dabei aufsteigend oder absteigend sein, auch kann die Achse 4 durch das Gewicht der Solaranlagen 12 gebogen sein. Des Weiteren können die Reihen in unterschiedlichen Höhen fixiert werden. Dabei ist der Abstand der Reihen als auch die Ausrichtung und Höhe so gewählt, dass diese sich möglichst wenig untereinander verschatten. Genauso kann eine Höhe gewählt werden, dass unter den Reihen die Nutzung des Landes für andere Zwecke möglich bleibt. Als Beispiele werden hier Fahrzeugbetrieb, landwirtschaftliche Nutzung, Fußgängerwege, Gebäude, Wälder, Schluchten, Gewässer oder ähnliches genannt. Bezugszeichen 9 beschreibt eine Kippachse 4 die eine Welle 3, eine Stange oder ein Seil oder eine vergleichbare Aufhängung ist. Bezugszeichen 10 beschreibt Ankerpunkte. Dies kann ein Ständer, ein Pfahl, ein Gebäude, ein Baum, ein Fels oder jegliche Art Anbindung sein. Bezugszeichen 12 beschreibt hier die Solaranlagen aus Figur 2, welche aus einem oder mehreren Solarmodulen/Solarpaneel 1 bestehen können.

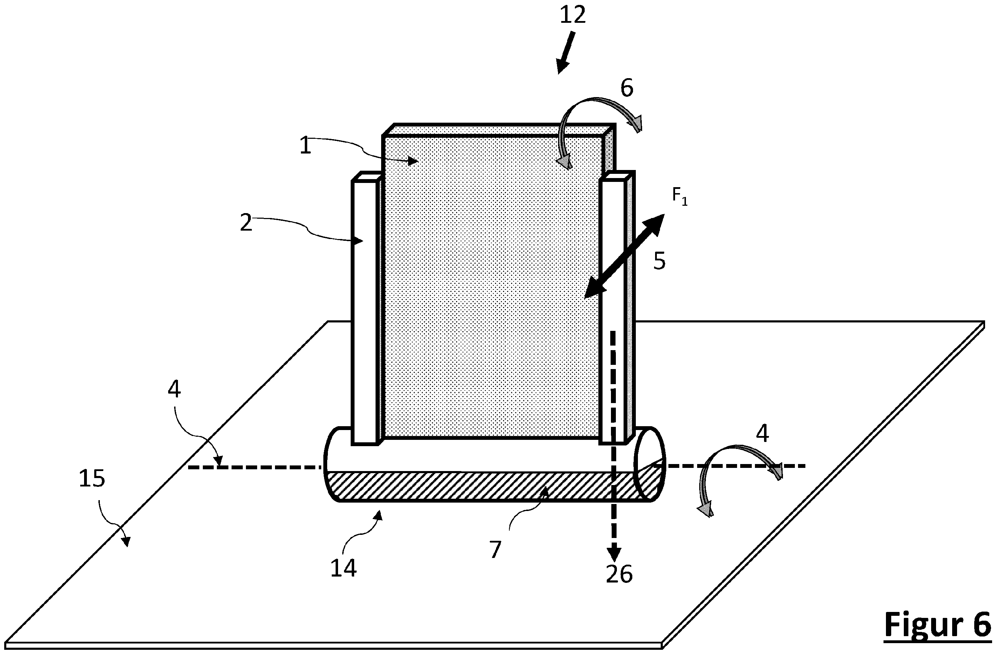

Figur 6 beschreibt eine auf einer im Wesentlichen horizontalen Fläche stehende Solaranlage 12 gemäß einer zweiten Ausführungsform der Erfindung. Ähnlich dem Prinzip in Figur 2 liegt der Schwerpunkt hier baubedingt unter der Drehachse 4. Der untere Körper der Solaranlage 12, der die Fläche berührt, ist so gewölbt, dass durch das Pendelgewicht 7 sich die Solaranlage nach dem Kippen immer wieder in die im Wesentlich senkrechte Position aufstellt, ähnlich einem steh-auf-Männchen.

Bezugszeichen 1 beschreibt hierbei die Solarplatte 1, deren Ausrichtung im Wesentlichen vertikal ist. Bezugszeichen 2 beschreibt den Rahmen 2, an der die Solarplatte 1 befestigt ist. Bezugszeichen 3 beschreibt die Welle 3, um die sich die Aufhängung bzw. die Solarplatte 1 drehen kann. Bezugszeichen 4 beschreibt die Kippachse 4, um die sich die Solaranlage 12 drehen kann. Bezugszeichen 5 beschreibt die Kraft 5 durch Geo-Kraft wie Strömung oder Impuls, im Wesentlichen senkrecht auf die Solarplatte bzw. die Solarfläche gerichtet. Beispielsweise kann dies Wind oder Wasserkraft sein. 6 beschreibt die Auslenkungsrichtung 6 bzw. Klapprichtung 6 der Solaranlage, im Wesentlichen senkrecht zur Solarfläche des Solarpaneels 1. Bezugszeichen 14 beschreibt den Achskörper 3, der auf der Unterseite oval bzw. mit einer Rundung ausgebildet ist. In diesem Körper 3 ist unter der Drehachse 4 ein Pendelgewicht 7 (schraffierter Bereich) eingebracht, so dass der Schwerpunkt unter der Drehachse 4 liegt. Dies ist so aufgebaut, dass die Solaranlage 12, nach einem Kippen, immer wieder in die im Wesentlich senkrechte (Ausgangs-)Position zurückgedrängt wird. Bezugszeichen 15 beschreibt eine (Aufstands-)Fläche. Dies kann ein Dach, eine Bodenfläche oder eine sonstige Fläche sein. Bezugszeichen 26 beschreibt die Senkrechte nach unten bzw. die Gravitationsrichtung 26.

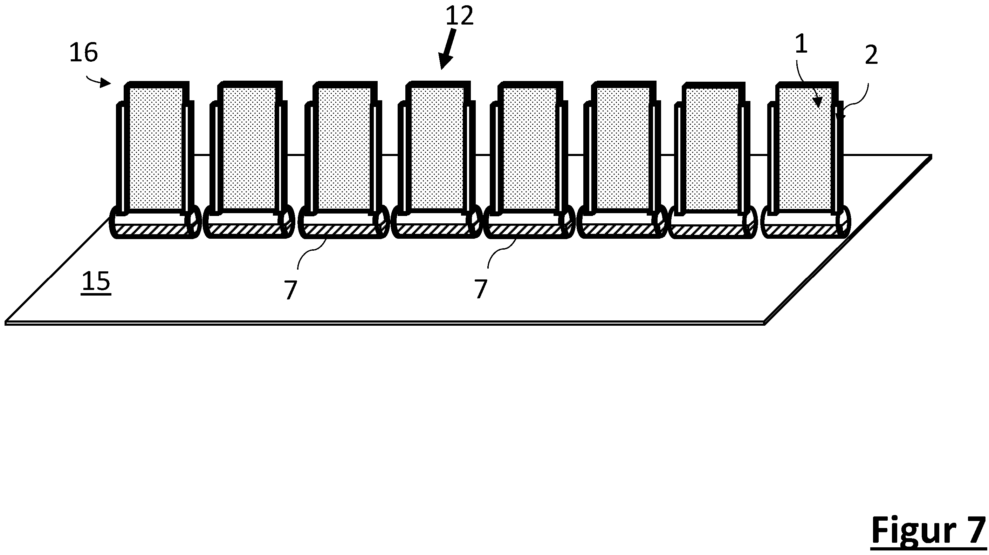

Figur 7 beschreibt einen Verbund von Anlagen nebeneinander nach Figur 6 Bezugszeichen (16) kennzeichnet die Anlagen nach Figur 6.

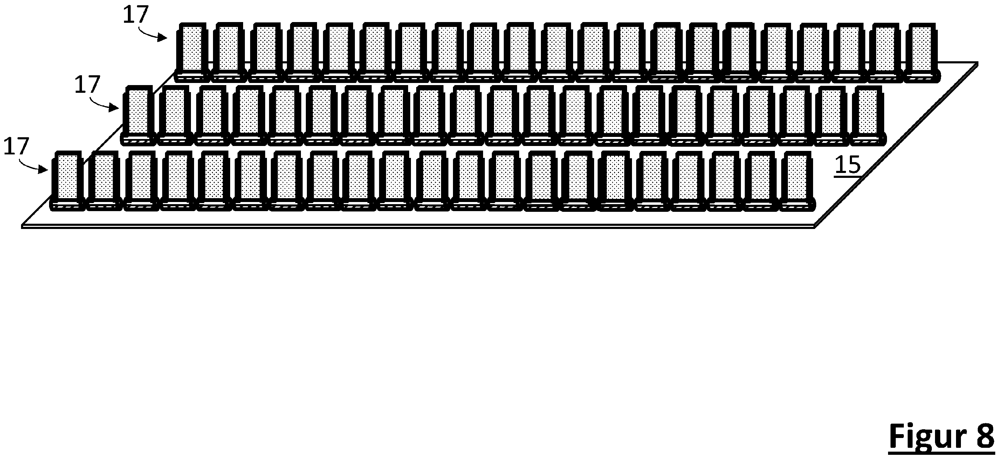

Figur 8 beschreibt einen Verbund von Solaranlagen gemäß den Figuren 6 und 7 nebeneinander und hintereinander. Es versteht sich von selbst, das diese auch in beliebiger anderer Anordnung auf der Fläche aufgestellt werden können. Bezugszeichen 17 beschreibt hierbei die Anlagenaus Fig. 7

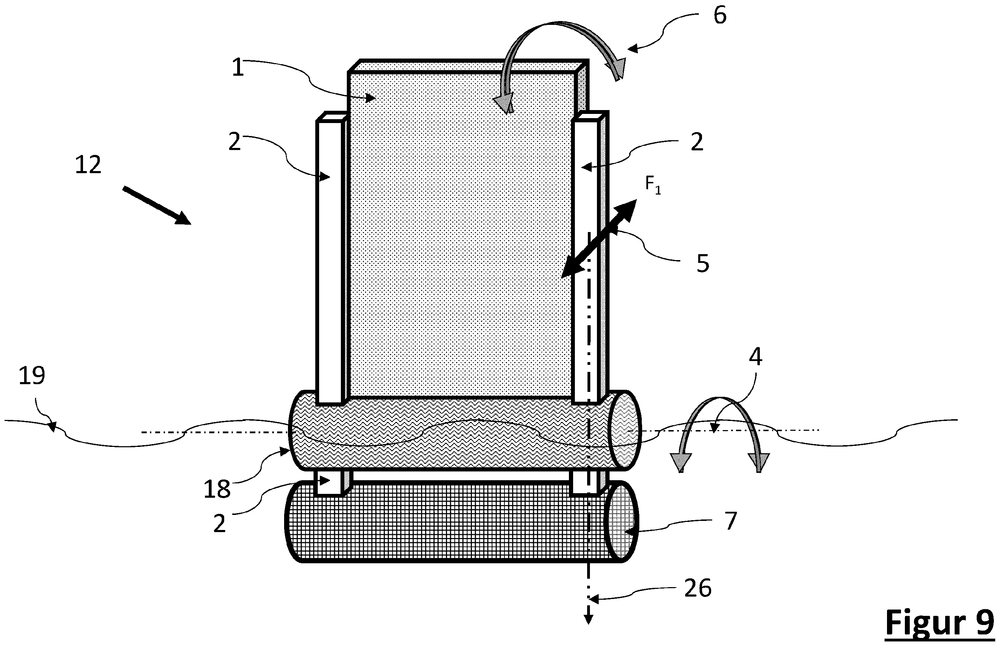

Figur 9 beschreibt eine Solaranlage gemäß einer dritten Ausführungsform nach dem Prinzip aus Fig. 2, wobei an der Achse 4 ein Auftriebskörper 18 montiert ist, so dass die Solaranlage 12 auf Flüssigkeiten, bspw. Wasser schwimmen kann. Selbstverständlich kann dies auch nach Fig. 1 erfolgen, so dass die Solarmodule unterhalb einer Flüssigkeitsoberfläche hängen würden. Die Solaranlagen weichen horizontalen Kräften und Impulsen als auch Strömungen aus. Die Anlage ist so ausgelegt, dass auch bspw. bei Wasserströmungen oder überschwappenden Wellen die Solaranlage in Kraftrichtung kippt und eine Beschädigung vermieden wird, beziehungsweise die Kraft 5 auf die Solaranlagen 12 stark reduziert wird.

Bezugszeichen 1 beschreibt hierbei die Solarplatte 1, deren Ausrichtung im Wesentlichen vertikal ist. Bezugszeichen 2 beschreibt den Rahmen 2, an der die Solarplatte 1 befestigt ist. Bezugszeichen 3 beschreibt die Welle 3, um die sich die Aufhängung bzw. die Solarplatte 1 drehen kann. Bezugszeichen 4 beschreibt die Kippachse 4, um die sich die Solaranlage 12 drehen kann. Dabei muss die Kippachse 4 nicht, wie beispielhaft in Figur 9 gezeigt, mit der Rotationsachse des Auftriebskörpers übereinstimmen, sondern wir im Wesentlichen durch die Auftriebskraft bestimmt mit der der Auftriebskörper die Solaranlage 12 über der Gewässeroberfläche 19 hält. Im Prinzip verläuft die Kippachse auf der Gewässeroberfläche 19. Bezugszeichen 5 beschreibt die Auslenkkraft 5, die z.B. durch Geo-Kraft, wie Strömung oder Impuls im Wesentlichen senkrecht auf die Solarplatte 1 bzw. die Solarfläche erzeugt wird. Beispielsweise kann dies eine Wind- oder Wasserkraft sein. Bezugszeichen 6 beschreibt die Auslenkungsrichtung bzw. Klapprichtung 6 der Solaranlage 12, im Wesentlichen senkrecht zur Solarfläche des Solarpaneels 1. Bezugszeichen 7 beschreibt das Gewicht bzw. Rückstellgewicht 7, welches so groß ist, dass der Schwerpunkt der Solaranlage 12 in Gravitationsrichtung 26 unter der Drehachse 4 liegt. Bezugszeichen 18 beschreibt einen Schwimmkörper oder Auftriebskörper 18. Dieser kann beliebig ausgebildet sein und entweder fest mit der Solaranlage 12 verbunden sein oder den Auftrieb über die Achse 4 erzeugen. Bezugszeichen 19 beschreibt die Oberfläche einer Flüssigkeit. Bezugszeichen 26 beschreibt die Senkrechte nach unten bzw. die Gravitationsrichtung 26. Die weiteren Bauteile entsprechen der ersten erfindungsgemäßen Ausführungsform nach Figur 2.

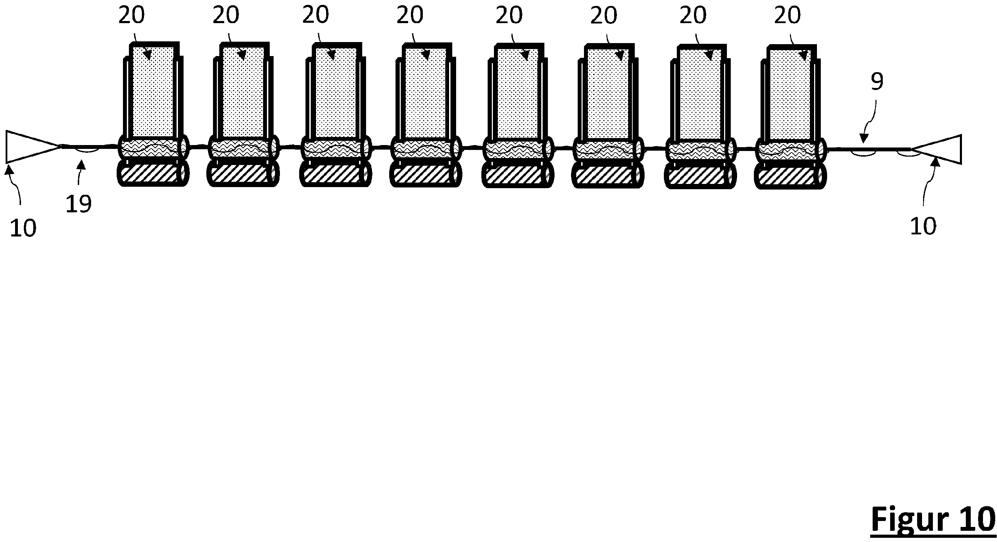

Figur 10 beschreibt einen schwimmenden Solaranlage-Verbund, der auf einer Flüssigkeitsoberfläche 19 schwimmt. Die einzelnen Solaranlagen 12 nach Fig. 9 sind hierbei durch ein Seil 9 oder eine starre oder flexible axiale Verbindung, z.B. mit einer oder mehreren Wellen 3 verbunden. Dabei können die einzelnen Solaranlagen 12 einzeln, gruppenweise und/oder gemeinsam kippen, wenn eine Auslenkkraft auf sie wirkt. Zum Gruppieren des Solaranlage können diese beispielsweise über ihre jeweiligen Rahmen miteinander verbunden sein, wobei sich bei einer solchen Ausführungsform auch mehrere Solaranlage einen Auftriebskörper teilen können, der dann durch seine Wasseraufstandsfläche die Kippachsenlage bestimmt.

Die Kippachse 4 wird mindestens an den äußeren Enden gehalten, z.B. an Ankerpunkten10. Diese, kann allerdings auch mehrfach gehalten werden. Die Haltepunkte können Anker mit Bojen, Landanbindungen, Schwimmkörper oder ähnliches sein. Die Anlage muss nicht zwingend stationär angebunden sein, sondern kann bspw. auch einseitig an einem Boot befestigt sein. Es versteht sich von selbst, dass die Verbindungsachse 9 nicht zwingend gerade sein muss, sondern beispielsweise durch äußere Kräfte, wie bspw. Wind und Wellen, gebogen sein kann. Bezugszeichen 9 beschreibt eine Achse, die eine Welle, eine Stange oder eine Seil oder eine vergleichbare Aufhängung sein kann. Bezugszeichen 10 beschreibt Ankerpunkte. Dies kann eine Boje, ein Boot, eine Landanbindung, schwimmend, schwimmend fixiert bzw. verankert oder im Wasser oder an Land fixiert sein. Bezugszeichen 19 beschreibt eine Flüssigkeitsoberfläche. Bezugszeichen 20 beschreibt die Solaranlagen nach Figur 9

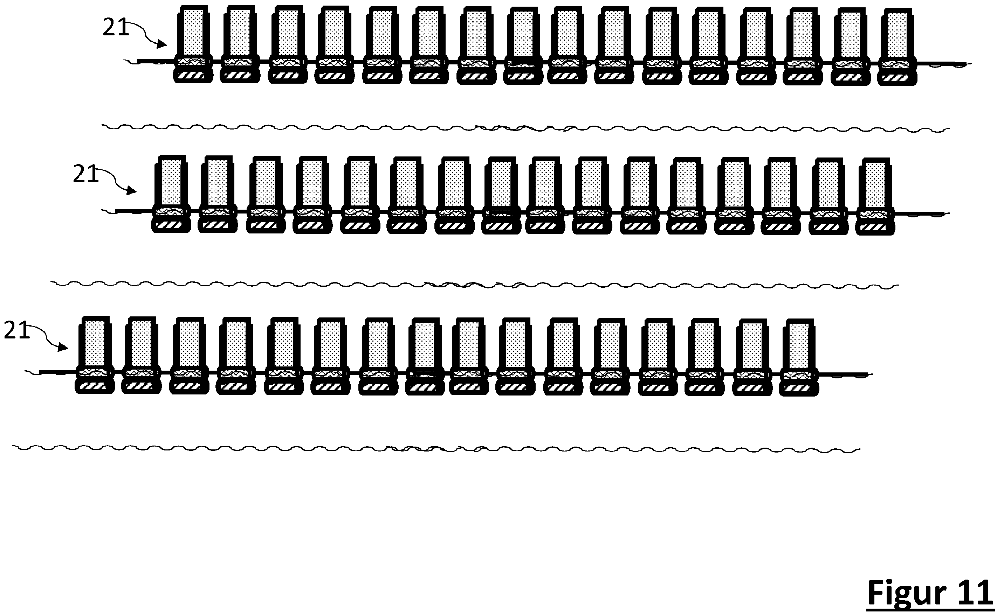

Figur 11 beschreibt einen Verbund von schwimmenden Solaranlagen nach Figur 10, nebeneinander und hintereinander. Bezugszeichen 21 bezeichnet hierbei schwimmende Solaranlagen nach Figur 10.

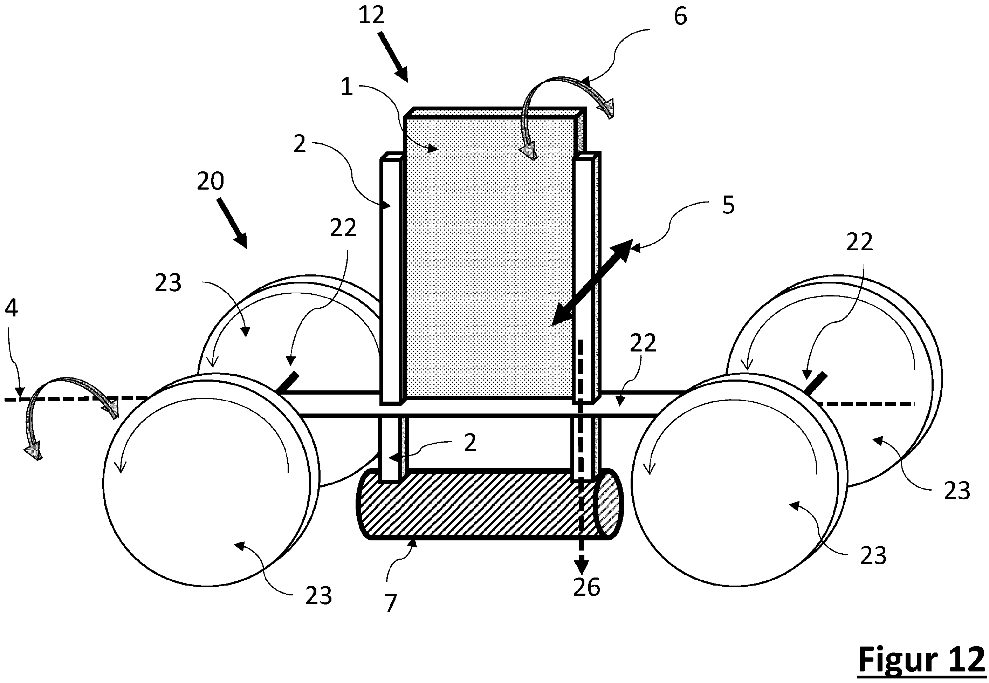

Figur 12 beschreibt eine vierte erfindungsgemäße Ausführungsform der Solaranlage 12 nach dem Prinzip aus Figur 2 oder einem der anderen Prinzipien. Dabei ist die Solaranlage 12auf einem mobilen Wagen 20 installiert. Bezugszeichen 1 beschreibt hierbei die Solarplatte 1, deren Ausrichtung im Wesentlichen vertikal ist. Bezugszeichen 2 beschreibt den Rahmen 2, an der die Solarplatte befestigt ist. Bezugszeichen 3 beschreibt die Welle 3, um die sich die Aufhängung bzw. die Solarplatte 1 drehen kann. Bezugszeichen 4 beschreibt die Kippachse 4, um die sich die Solaranlage 12 drehen kann. Bezugszeichen 5 beschreibt die Auslenkkraft 5 durch Geo-Kraft hervorgerufen, wie Wind, Strömung oder Impuls im Wesentlichen senkrecht auf die Solarplatte 1 bzw. die Solarfläche. Beispielsweise kann dies Wind oder Wasserkraft sein. Bezugszeichen 6 beschreibt die Auslenkungsrichtung 6 bzw. Klapprichtung der Solaranlage 12, im Wesentlichen senkrecht zur Solarfläche des Solarpaneels 1. Bezugszeichen 7 beschreibt das Gewicht bzw. Rückstellgewicht 7, welches so groß ist, dass der Schwerpunkt der Solaranlage in Gravitationsrichtung 26 unter der Drehachse 4 liegt. Bezugszeichen 22 beschreibt das Fahrgestell 22 des Fahrzeugs. Bezugszeichen 23 beschreibt die Räder 23 des Fahrzeugs 20. Diese können angetrieben und lenkbar ausgeführt werden. Bezugszeichen 26 beschreibt die Senkrechte nach unten bzw. die Gravitationsrichtung 26.

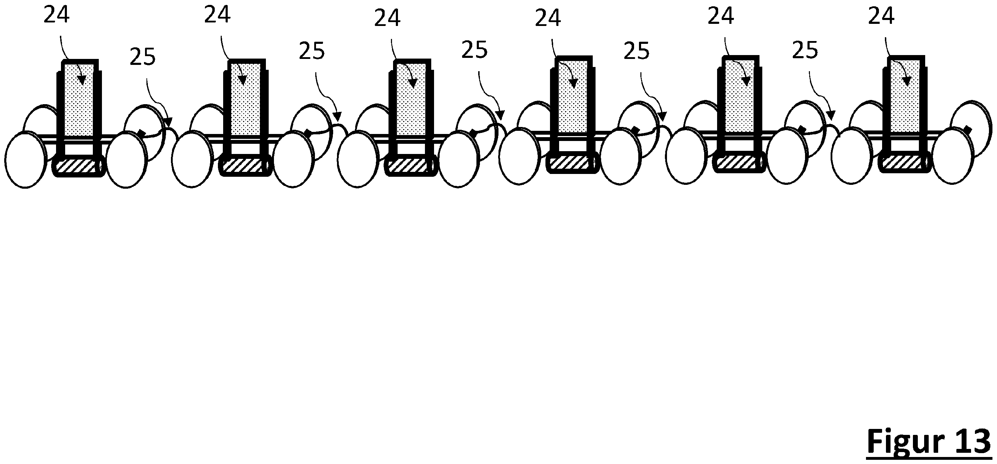

Figur 13 beschreibt eine Verkettung von fahrbaren Solaranlagen nach Fig. 12. Dabei sind die Solaranlagen 24 wie eine Eisenbahn bzw. Eisenbahnwagons mit flexiblen Verbindern 25 mit einander verbunden. Bezugszeichen 24 beschreibt die Solaranlagen 24 nach Figur 12. Bezugszeichen 25 beschreibt die flexiblen Verbindungsachsen zwischen den Wagen 20.

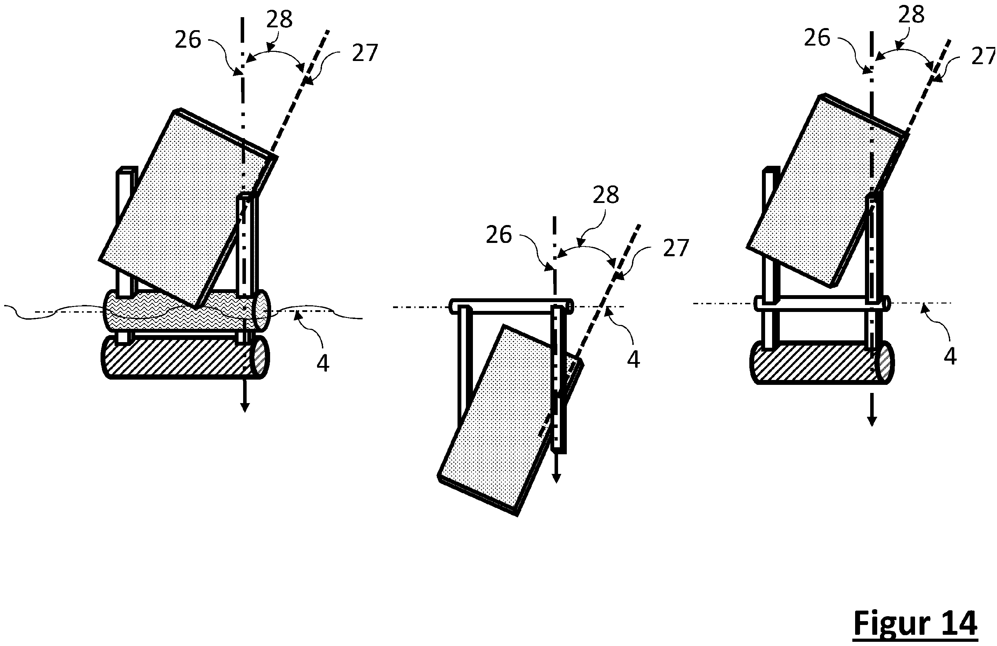

Figur 14 beschreibt eine winklige Anbindung der Solarmodule 1 im Grundzustand. Dies kann bei einer Südausrichtung die Ertragswerte verbessern. Alle Prinzipien der Solaranlagen aus Figur 1, Figur 2, Figur 6, Figur 9 oder Figur 12 können hier gleichermaßen verwendet werden. Bezugszeichen 26 beschreibt die Senkrechte nach unten bzw. die Gravitationsrichtung 26. Bezugszeichen 27 beschreibt die Achsabweichung 27 der Solarfläche zu Gravitationsrichtung 26 im Ruhezustand. Bezugszeichen 28 ist der Winkel zwischen der Gravitationsrichtung 26 und der Achsabweichung 27.

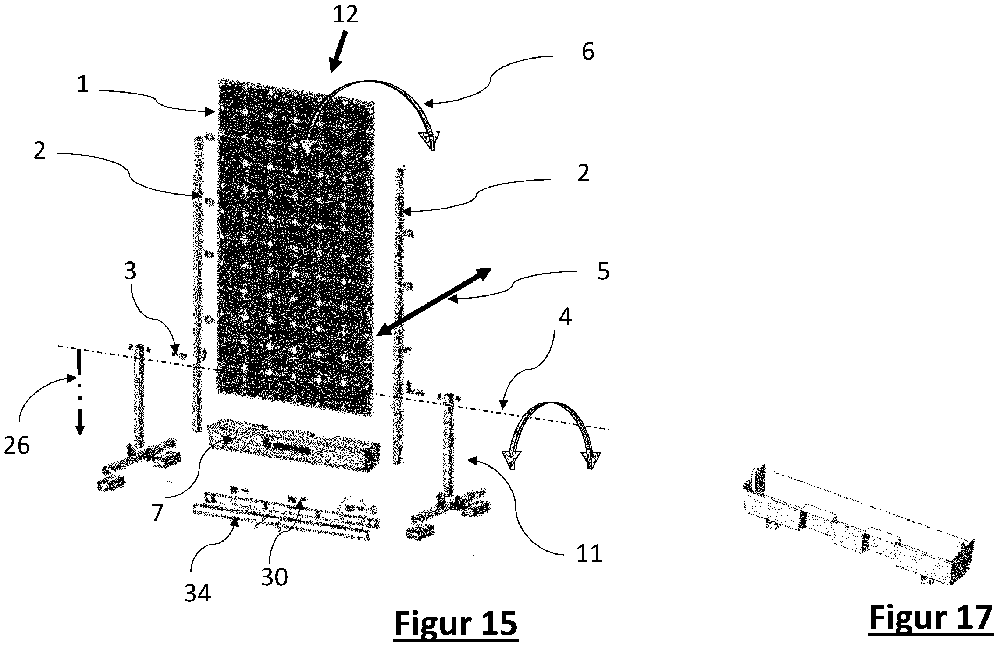

Figur 15 zeigt eine Explosionsdarstellung der erste Ausführungsform der erfindungsgemäßen Solaranlage 12, die den Prinzipien, die in den Figuren 2 und 5 gezeigt folgt. Die in Figur 15 boden- oder flächengestützte Ausführungsform, die auch einer Ladefläche einer mobilen Vorrichtung, z.B. eines Fahrzeuges, einer Eisenbahn oder eines Schiffes montierbar ist, weist zumindest ein Solarpaneel 1 auf, das in der Ausgangsposition oder Ruhestellung im Wesentlichen vertikal ausgerichtet ist. Gehalten wird das Solarpaneel 1 durch zwei seitlich am Solarpaneel 1 angebrachte Längsprofile, die unterhalb des Solarpaneels 1 mit einem Rückstellgewicht 7 zu einem nach oben offenen Rahmen 2 verbunden sind. Der Rahmen 2 ist beispielsweise im vertikal unteren Bereich des Solarpanels 1 über Wellen 3, die die Kippachse 4 definieren, mit einem Gestell 1 verbunden, das auf einem Boden oder einer Ladefläche festmachbar ist. Das in Figur 15 gezeigte Solarpaneel 1 ist so um eine im Wesentlichen horizontale, unterhalb des Solarpanels 1 verlaufende Kippachse 4 aus der Ausgangsposition heraus kippbar, wenn auf das Solarpanel 1 eine Auslenkkraft 5 quer zur Kippachse 4 wirkt. Bei Nachlassen der Auslenkkraft 5 kann sich der Rahmen 2 aufgrund der vom Rückstellgewicht 7 erzeugten Gegenkraft selbsttätig um die Kippachse 4 in Richtung der Ausgangsposition zurückstellen.

In dem Ausführungsbeispiel der Figur 15 sind die beiden Standfüße des Gestells 11 mit einer Strebe 34 verbunden, die beispielsweise aus einem magnetischen Metall gefertigt ist oder an der ein magnetisches Metallelement befestigt werden kann. Gegenüber im Rückstellgewicht 7 kann fest oder elastisch mit dem Rückstellgewicht ein Magnet, beispielsweise ein Permanentmagnet so angeordnet sein, dass der Magnet in Ruhestellung/Ausgangstellung der Solaranlage 12 das magnetische Metallelement anzieht und die Solaranlage 12 in einer Art magnetischen Rastung hält, sodass für die Auslenkung der Solaranlage 12 durch eine auf das Solarpaneel 1 wirkende Kraft in Minimalwert vorgebbar ist. Wie der Fachmann leicht erkennt, kann die Magnetmagnetisches Metallelement Anordnung oder besonderen Aufwand auch umgekehrt werden, sodass der Magnet auf der Strebe 34 befestigt ist, beispielsweise flexibel mittels einer Blattfeder, einer Gummilasche oder Ähnlichem. Im Rückstellgewischt wird dann ein ferromagnetisches Material, z.B. ein Stahlblech eingegossen. Bevorzugt ist entweder der Magnet oder das magnetische Gegenstück in die Betonmasse eines aus Beton gegossenen Rückstellgewicht eingegossen.

Im Fall der metallischen Ausführung der Rückstellgewicht 7 kann es ausreichen nur eine Magneten auf der Strebe 34 des Gestells 11 zu befestigen. Hier wird der Fachmann äquivalente Lösungen finden, wie eine durch eine Mindestauslenkkraft überwindbare Arretierung /Rastung des kippbaren Solarpaneels 1 ausgeführt werden kann. Dabei ist die Lösung mit einem Magnet nur eine von vielen Möglichkeiten. Feder- Reibkraft- oder Dämpferlösungen sind hier genauso denkbar und somit vom Geist der Erfindung umfasst.

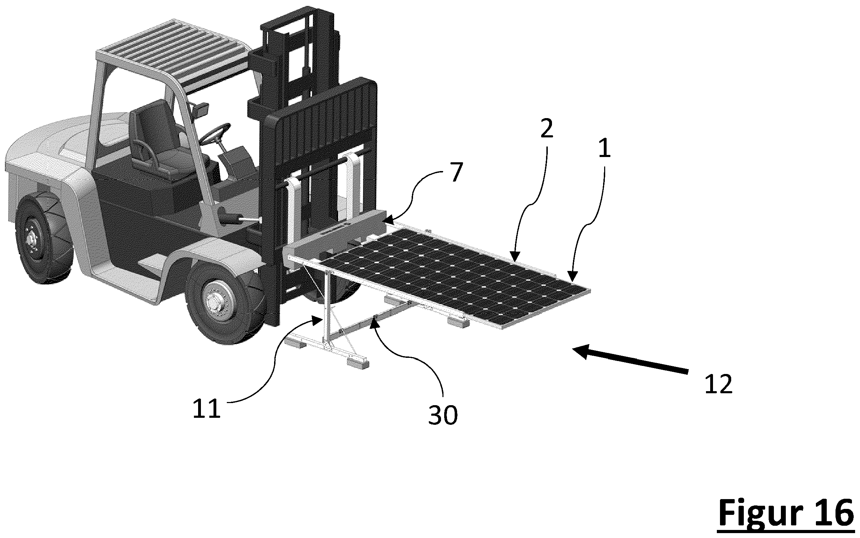

Das in Figur 15 gezeigte Rückstellgewicht 7 ist dabei beispielsweise ein Gusskörper aus Beton, der auf zumindest einer der zum Solarpaneel 1 parallelen Flächen zwei Ausnehmungen zeigt, die es ermöglichen das Rückstellgewicht 7 allein oder die gesamte Solaranlage 12 mittels einer Transportvorrichtung zu transportieren. Ein solcher beispielhafter Transport ist mit Figur 16 gezeigt.

Figur 17 zeigt eine Schalungsform zum Herstellen eines erfindungsgemäßen Rückstellgewichts 7, wobei die Wände der Längsseiten niedriger ausgebildet sind als die der Breitseiten. So können mehrere Schalungsformen mit ihren Längsseiten aneinanderliegend in einem Betongussvorgang gleichzeitig befüllt werden, da überschüssiger Beton von einer Schalungsform zu nächsten fließen kann und die höheren Breitseiten ein seitliches Abfließen der flüssigen Betonmasse verhindern. Bevorzugt werden vor dem Ausgießen der Schalungsformen mit Beton Einlegeteile, wie Transportösen, Befestigungselemente, oder magnetische Elemente in die jeweiligen Schalungsformen so eingebracht, dass diese während des Einfüllens der nicht-ausgehärteten Betonmasse nicht aufschwimmen und nach Aushärten der Betonmasse an einer innerhalb der Solaranlage 12 vorbestimmten Position angeordnet sind.

Insgesamt stellt die Erfindung ein kostengünstige, modulare und robuste Lösung zum Aufstellen von Solarpaneelen 1 auf dem Land oder dem Wasser bereit, wobei die erfindungsgemäßen Solaranlagen 12 sowohl ortsfest, transportabel von einem Ort zu einem anderen oder bewegt/mobil zum Einsatz kommen können. Durch die kippbare Ausführung der Solarpaneele ist eine hochfeste Verankerung, wie beispielsweise eine Verankerung mittels Fundamenten oft nicht erforderlich, sondern es reicht eine ausreichende Beschwerung der landgestützten Ausführungsform. Für die schwimmende Ausführungsform reicht eine Anbindung an einem Ankerpunkt, um die Solaranlagen 12 in der gewünschten Ost-West-Ausrichtung zu halten und gegen Wegschwimmen zu sichern. Dabei kommen bi-faziale Solarpaneele 1 zum Einsatz, die beidseitig Solarstrom erzeugen können, was auf dem Wasser speziell wegen des Reflexionseffektes bevorzugt ist.

### Bezugszeichenliste

- 1: Solarpaneel / Solarplatte
- 2: Rahmen
- 3: Welle / Achskörper
- 4: Achse / Kippachse
- 5: Kraft
- 6: Auslenk- / Kipp / Klapprichtung
- 7: Gewicht Rückstellgewicht
- 8: Ausnehmungen
- 9: Achse / Welle, Stange, Seil
- 10: Ankerpunkt Ständer, Pfahl, Gebäude, Baum, Fels
- 11: Standfuß / Gestell
- 12: Solaranlage aus mehreren Solarmodulen
- 13: Aufständerung
- 14 15: (Aufstands-)Fläche
- 16 17 18: Auftriebskörper/ Schwimmkörper
- 19: Oberfläche einer Flüssigkeit Gewässer
- 20: Fahrzeug / mobiler Wagen
- 21: Schwimmende Solaranlage
- 22: Fahrgestell
- 23: Räder
- 2425: Flexible Verbindungsachse zwischen Wagen
- 26: Gravitationsrichtung /Senkrechte / Vertikale
- 27: Achsabweichung
- 28: Winkel zwischen vertikaler und Achsabweichung
- 29 30: Magnet
- 31: magnetisches Gegenelement
- 34: Strebe

## Patentansprüche

1. Solaranlage mit zumindest einem Solarpaneel, das in einem in einer im Wesentlichen vertikalen bzw. aufrechten Grundposition ausgerichteten Rahmen (2) fest aufgenommen ist, der, das Solarpanel (1) im Wesentlichen vertikal bzw. aufrecht stehend hält, wobei der Rahmen (2) um eine im Wesentlichen horizontale, im vertikal unteren Bereich des Solarpanels (1) oder um eine im Wesentlichen horizontale, unterhalb des Solarpanels (1) verlaufende Kippachse (4) aus der Grundposition heraus kippbar ist, wenn auf das Solarpanel (1) eine Auslenkkraft (5) quer zur Kippachse (4) wirkt, und sich der Rahmen (2) bei Nachlassen der Auslenkkraft (5) mittels eines in der Gravitationsrichtung unterhalb der Kippachse angeordneten Rückstellgewichts selbsttätig um die Kippachse (4) in Richtung der Grundposition zurückstellt wobei die Solaranlage zur Verwendung für die Aufständerung in der Ost-West Ausrichtung vorgesehen ist und das zumindest eine Solarpaneel (1) ein bi-faziales Solarpanel ist.

2. Solaranlage nach Anspruch 1, bei der der Rahmen (2) nach oben offen ist.

3. Solaranlage nach einem der vorangegangenen Ansprüche, bei der das Solarpanel (1) bezüglich der Vertikalen um eine im Wesentlichen horizontale Achse gedreht im Rahmen (2) aufgenommen ist.

4. Solaranlage nach einem der vorangegangenen Ansprüche, bei der Geo-Einflüsse die Auslenkkraft (5) bewirken.

5. Solaranlage nach Anspruch 1 bis 4, bei der das Rückstellgewicht (7) in Form eines quer zur Kippachse (4) konvex gewölbten Standfußes ausgebildet ist, auf dem die Solaranlage kippbar ist.

6. Solaranlage nach Anspruch 1 bis 4, bei der das Rückstellgewicht (7) bezüglich der Kippachse (4) gegenüberliegend zum Solarpanel (1) angeordnet ist.

7. Solaranlage nach einem der Ansprüche 1 bis 4 oder 6, bei der der Rahmen (2) an einer ortsfest aufstellbaren Aufständerung (13) derart befestigt ist, dass er um die Kippachse (4) aus der Grundposition heraus kippbar ist, und selbsttätig um die Kippachse (4) in Richtung der Grundposition zurückstellt, wenn eine Auslenkkraft auf das Solarpanel (2) geringer wird.

8. Solaranlage nach einem der vorangegangenen Ansprüche, bei der der Rahmen (2) bei Nachlassen der Auslenkkraft (5) unter Zuhilfenahme einer Federkraft, einer elektrischen oder elektromechanischen Kraft oder einer magnetostatischen oder elektromagnetischen Kraft in Richtung der Grundposition zurückstellt wird.

9. Solaranlage nach Anspruch 8, bei der der Rahmen (2) in der Grundposition durch eine Federkraft, eine mechanische, eine elektrische oder elektromechanische Kraft oder eine magnetostatische oder elektromagnetische Kraft gehalten wird, sodass zur Auslenkung des Solarpaneels (1) eine vordefinierte Mindestauslenkkraft (5) erforderlich ist.

10. Solaranlage nach einem der vorangegangenen Ansprüche, bei der die Solaranlage auf einer mobilen Vorrichtung installiert ist.

11. Solaranlage nach einem der Ansprüche 6, 8 oder 9, bei der am Rahmen (2) ein Auftriebskörper (18) befestigt ist, der zwischen dem Solarpanel (1) und dem Rückstellgewicht (7) angeordnet ist, und geeignet ist, das Solarpaneel (1) schwimmend über einer Gewässeroberfläche zu halten.

12. Solaranlage nach einem der vorangegangenen Ansprüche 1 bis 11, bei der das Rückstellgewicht (7) aus Beton hergestellt oder ein mit Flüssigkeit, Wasser, Schüttgut, Kies oder Sand befülltes Behältnis ist.

13. Solaranlage nach einem der vorangegangenen Ansprüche 1 bis 12, bei der das Rückstellgewicht (7) Ausnehmungen (8) aufweist, mittels derer das Rückstellgewicht (7) und/oder die Solaranlage zusammen mit dem drehfest am Rahmen (2) montierten Rückstellgewicht (7) von einer Transportvorrichtung bewegbar ist.

14. Solaranlage nach einem der vorangegangenen Ansprüche, bei der ein Magnet (30) oder ein magnetisches Gegenelement (31) starr oder elastisch am beweglichen Teil des Rahmen (2) oder am Rückstellgewicht (7) angebracht ist, wobei das zugehörige Gegenelement oder der Magnet entsprechend elastisch oder starr auf einem ortfesten Teil der Solaranlage angebracht ist.

15. Solarsystem mit mehreren Solaranlagen gemäß einem der Ansprüche 1 bis 14, wobei die Solaranlagen mittels des Rahmens (2) auf einer gemeinsamen die Kippachse (4) aufweisenden Welle (3), derart angeordnet sind, dass sie zu zumindest teilweise unabhängig voneinander um die Kippachse (4) kippen können.

16. Solarsystem mit mehreren schwimmenden Solaranlagen gemäß einem der Ansprüche 11 bis 12, wobei eine Reihe von Solaranlagen über die Rahmen (2) und/oder Auftriebskörper (18) miteinander verbunden sind.

17. Verfahren für die Montage einer Solaranlage nach einem der Ansprüche 12 bis 14 bzw. eines Solarsystems nach einem der Ansprüche 15 oder 16, bei dem mehrere Schalungsformen für das Betonieren der Rückstellgewichte (7) so ausgestaltet werden, dass diese abstandsfrei hintereinander auf einer Fläche aufgereiht werden können und benachbarte, einander sich berührende Seitenflächen dieselbe Höhe aufweisen, wobei die quer dazu stehenden Seitenflächen eine größere Höhe aufweisen, und das Einfüllen von nicht-ausgehärteter Betonmasse so vorgenommen wird, dass flüssige/nicht-ausgehärtete Betonmasse, die über eine Schalungsform hinaus läuft, in zumindest eine angrenzende Schalungsform hineinläuft.

18. Verfahren nach Anspruch 17, wobei vor dem Einfüllen von flüssiger/nicht-ausgehärteter Betonmasse in die Schalungsformen Einlegeteile, wie Transportösen, Befestigungselemente oder magnetische Elemente in die jeweiligen Schalungsformen so eingebracht werden, dass diese während des Einfüllens der flüssigen/nicht-ausgehärteten Betonmasse nicht aufschwimmen und nach Aushärten der Betonmasse an einer innerhalb der Solaranlage vorbestimmten Position angeordnet sind, sodass diese gegebenenfalls nach dem Aushärten vom Rückstellgewicht (7) entfernt werden können.

## Claims

1. Solar energy system having at least one solar panel which is fixedly accommodated in a frame (2) which is aligned in a substantially vertical or upright default position and which holds the solar panel (1) in a substantially vertical or upright position, the frame (2) can be tilted out of the default position about a substantially horizontal tilting axis (4) extending in the vertically lower region of the solar panel (1) or about a substantially horizontal tilting axis (4) extending below the solar panel (1) when a deflection force (5) acts on the solar panel (1) transversely to the tilting axis (4), and the frame (2) automatically returns about the tilting axis (4) in the direction of the default position by means of a restoring weight arranged in the gravitational direction below the tilting axis when the deflection force (5) is released,
wherein the solar energy system is intended for use for elevation in the east-west orientation and the at least one solar panel (1) is a bi-facial solar panel.

2. Solar energy system according to claim 1, wherein the frame (2) is open at the top.

3. The solar energy system according to any one of the preceding claims, wherein with respect to the vertical, the solar panel (1) is received in the frame (2) rotated about a substantially horizontal axis.

4. Solar energy system according to any of the preceding claims, wherein geo-influences cause the deflection force (5).

5. Solar energy system according to claims 1 to 4, in which the restoring weight (7) is formed in the form of a convexly curved pedestal transverse to the tilting axis (4), on which the solar energy system can be tilted.

6. Solar energy system according to claims 1 to 4, in which the restoring weight (7) is arranged with respect to the tilting axis (4) opposite to the solar panel (1).

7. Solar energy system according to one of claims 1 to 4 or 6, in which the frame (2) is fastened to a stationary elevation (13) in such a way that it can be tilted about the tilting axis (4) out of the default position and automatically returns about the tilting axis (4) in the direction to the default position when a deflection force on the solar panel (2) becomes less.

8. Solar energy system according to one of the preceding claims, in which the frame (2) is repositioned in the direction to the default position with the help of a spring force, an electrical or electromechanical force or a magnetostatic or electromagnetic force when the deflection force (5) is reduced.

9. Solar energy system according to claim 8, in which the frame (2) is held in the default position by a spring force, a mechanical, an electrical or electromechanical force or a magnetostatic or electromagnetic force, so that a predefined minimum deflection force (5) is required to deflect the solar panel (1).

10. Solar energy system according to any one of the preceding claims, wherein the solar energy system is installed on a mobile device.

11. Solar energy system according to any one of claims 6, 8 or 9, wherein a buoyancy body (18) is attached to the frame (2), which is arranged between the solar panel (1) and the restoring weight (7) and is suitable for keeping the solar panel (1) floating above a water surface.

12. Solar energy system according to any one of the preceding claims 1 to 11, wherein the restoring weight (7) is made of concrete or is a container filled with liquid, water, bulk material, gravel or sand.

13. Solar energy system according to one of the preceding claims 1 to 12, wherein the restoring weight (7) has recesses (8) by means of which the restoring weight (7) and/or the solar energy system can be moved by a transport device together with the restoring weight (7) mounted in a rotationally fixed manner on the frame (2).

14. Solar energy system according to one of the preceding claims, wherein a magnet (30) or a magnetic counter element (31) is rigidly or elastically attached to the movable part of the frame (2) or to the restoring weight (7), wherein the associated counter element or the magnet is correspondingly elastically or rigidly attached to a stationary part of the solar energy system.

15. Solar plant with several solar energy systems according to one of the claims 1 to 14, wherein the solar energy systems are arranged on a common shaft (3) comprising the tilting axis (4) by means of the frame (2) in such a way that they can tilt at least partially independently of each other about the tilting axis (4).

16. A solar plant comprising a plurality of floating solar energy systems according to any one of claims 11 to 12, wherein a row of solar energy systems are connected to each other via the frames (2) and/or the buoyancy bodies (18).

17. Method for mounting a solar energy system according to one of claims 12 to 14 or of a solar plant according to one of the claims 15 or 16, in which a plurality of formwork forms for concreting the restoring weights (7) are designed in such a way that they can be lined up one behind the other on a surface without spacing and wherein neighboring side surfaces touching each other have the same height and the side surfaces transverse thereto have a greater height, and the filling of non-cured concrete mass is carried out in such a way that liquid/non-cured concrete mass which runs over one formwork form runs into at least one neighboring formwork form.

18. Method according to claim 17, wherein before filling liquid/non-cured concrete mass into the formwork forms, inserts such as transport eyes, fastening elements or magnetic elements are introduced into the respective formwork forms in such a way that these do not float during the filling of the liquid/non-cured concrete mass and are arranged in a predetermined position within the solar energy system after the concrete mass has cured, so that these can be removed from the restoring weight (7) after curing if necessary.

## Revendications

1. Installation solaire avec au moins un panneau solaire qui est logé de manière fixe dans un cadre (2) orienté dans une position de base sensiblement verticale ou verticale, qui maintient le panneau solaire (1) sensiblement vertical ou vertical, le cadre (2) pouvant être basculé à partir de la position de base autour d'un axe de basculement (4) sensiblement horizontal s'étendant au-dessous du panneau solaire, lorsqu'une force de déviation (5) transversale à l'axe de basculement (4) agit sur le panneau solaire (1), et le cadre (2), lorsque la force de déviation (5) diminue, se remet automatiquement en place autour de l'axe de basculement (4) en direction de la position de base au moyen d'un poids de rappel disposé en dessous de l'axe de basculement dans le sens de la gravitation, l'installation solaire étant prévue pour être utilisée pour la surélévation dans l'orientation est-ouest et l'au moins un panneau solaire (1) étant un panneau solaire bifacial.

2. Installation solaire selon la revendication 1, dans laquelle le cadre (2) est ouvert vers le haut.

3. Installation solaire selon l'une des revendications précédentes, dans laquelle le panneau solaire (1) est logé dans le cadre (2) en étant tourné par rapport à la verticale autour d'un axe sensiblement horizontal.

4. Installation solaire selon l'une des revendications précédentes, dans laquelle des géo-influences provoquent la force de déviation (5).

5. Installation solaire selon les revendications 1 à 4, dans laquelle le poids de rappel (7) est conçu sous la forme d'un pied d'appui à courbure convexe transversal à l'axe de basculement (4), sur lequel l'installation solaire peut basculer.

6. Installation solaire selon les revendications 1 bis 4, dans laquelle le poids de rappel (7) est disposé à l'opposé du panneau solaire (1) par rapport à l'axe de basculement (4).

7. Installation solaire selon l'une des revendications 1 à 4 ou 6, dans laquelle le cadre (2) est fixé à une surélévation (13) pouvant être installée de manière fixe, de sorte à pouvoir basculer autour de l'axe de basculement (4) à partir de la position de base, et est ramené automatiquement autour de l'axe de basculement (4) en direction de la position de base lorsqu'une force de déviation exercée sur le panneau solaire (2) diminue.

8. Installation solaire selon l'une des revendications précédentes, dans laquelle le cadre (2) est ramené en direction de la position de base lorsque la force de déviation (5) diminue, à l'aide d'une force élastique, d'une force électrique ou électromécanique ou d'une force magnétostatique ou électromagnétique.

9. Installation solaire selon la revendication 8, dans laquelle le cadre (2) est maintenu dans la position de base par une force élastique, une force mécanique, une force électrique ou électromécanique ou une force magnétostatique ou électromagnétique, de sorte qu'une force de déviation minimale prédéfinie (5) est nécessaire pour dévier le panneau solaire (1).

10. Installation solaire selon l'une quelconque des revendications précédentes, dans laquelle l'installation solaire est installée sur un dispositif mobile.

11. Installation solaire selon l'une des revendications 6, 8 ou 9, dans laquelle est fixé au cadre (2) un corps de flottaison (18) qui est disposé entre le panneau solaire (1) et le poids de rappel (7) et qui est apte à maintenir le panneau solaire (1) en flottaison au-dessus d'une surface d'eau.

12. Installation solaire selon l'une quelconque des revendications précédentes 1 à 11, dans laquelle le poids de rappel (7) est fabriqué en béton ou est un récipient rempli de liquide, d'eau, de vrac, de gravier ou de sable.

13. Installation solaire selon l'une des revendications précédentes 1 à 12, dans laquelle le poids de rappel (7) présente des évidements (8) au moyen desquels le poids de rappel (7) et/ou l'installation solaire peuvent être déplacés par un dispositif de transport conjointement avec le poids de rappel (7) monté de manière solidaire en rotation sur le cadre (2).

14. Installation solaire selon l'une des revendications précédentes, dans laquelle un aimant (30) ou un contre-élément magnétique (31) est monté de manière rigide ou élastique sur la partie mobile du cadre (2) ou sur le poids de rappel (7), le contre-élément ou l'aimant associé étant respectivement monté de manière élastique ou rigide sur une partie fixe de l'installation solaire.

15. Système solaire comprenant plusieurs installations solaires selon l'une des revendications 1 à 14, dans lequel les installations solaires sont disposées au moyen du cadre (2) sur un arbre commun (3) présentant l'axe de basculement (4), de sorte à pouvoir basculer au moins partiellement indépendamment les unes des autres autour de l'axe de basculement (4).

16. Système solaire comprenant plusieurs installations solaires flottantes selon l'une des revendications 11 à 12, dans lequel une série d'installations solaires sont reliées entre elles par l'intermédiaire des cadres (2) et/ou des corps de flottaison (18).

17. Procédé de montage d'un système solaire selon l'une des revendications 12 à 14 ou d'un système solaire selon l'une des revendications 15 ou 16, dans lequel plusieurs formes de coffrage pour le bétonnage des poids de rappel (7) sont conçues de telle sorte que ceux-ci peuvent être alignés de manière contiguë les uns derrière les autres et que des surfaces latérales voisines qui se touchent présentent la même hauteur, les surfaces latérales perpendiculaires à celles-ci présentant une hauteur plus importante, et le remplissage de la masse de béton non durcie étant effectué de telle sorte que la masse de béton liquide/non durcie s'écoulant en dehors d'un moule de coffrage s'écoule dans au moins un moule de coffrage adjacent.

18. Procédé selon la revendication 17, dans lequel, avant le remplissage de la masse de béton liquide/non durcie dans les moules de coffrage, des inserts, tels que des anneaux de levage, des éléments de fixation ou des éléments magnétiques, sont introduits dans les moules de coffrage respectifs de sorte que ceux-ci ne flottent pas pendant le remplissage de la masse de béton liquide/non durcie et sont disposés, après le durcissement de la masse de béton, dans une position prédéterminée à l'intérieur de l'installation solaire, de sorte que ceux-ci peuvent être éventuellement retirés du poids de rappel (7).
